# EUROPÄISCHE PATENTSCHRIFT

(11) **EP 1 913 067 B1**
(45) Veröffentlichungstag und Bekanntmachung des Hinweises auf die Patenterteilung: **07.10.2009**
(21) Anmeldenummer: 06776710.3
(22) Anmeldetag: 09.08.2006
(51) Int. Cl.: C08K 5/00

(54) **STABILISATORZUSAMMENSETZUNGEN AUF DER BASIS VON GUANIDIN- ODER MELAMIN-VERBINDUNGEN ZUR STABILISIERUNG HALOGENHALTIGER POLYMERER**
STABILIZER COMPOSITIONS BASED ON GUANIDINE OR MELAMINE COMPOUNDS TO STABILIZE HALOGEN-CONTAINING POLYMERS
COMPOSITIONS STABILISANTES A BASE DE COMPOSES DE GUANIDINE OU DE MELAMINE POUR STABILISER DES POLYMERES HALOGENES

(30) Priorität: 12.08.2005 DE 102005038276
(43) Veröffentlichungstag der Anmeldung: 23.04.2008
(73) Patentinhaber: Baerlocher GmbH, 85716 Unterschleissheim (DE)
(72) Erfinder: REITH, Walter, 82281 Egenhofen (DE); SANDER, Hans-Jürgen, 64653 Lorsch (DE); REICHWALD, Frank, 80992 München (DE); FOKKEN, Stefan, 85244 Biberbach (DE)
(74) Vertreter: Fiesser, Gerold Michael
(86) Internationale Anmeldenummer: PCT/EP2006/007886
(87) Internationale Veröffentlichungsnummer: WO 2007/019999

(56) Entgegenhaltungen:
- EP-A- 1 348 542
- WO-A-99/48997
- WO-A-02/062914
- WO-A-02/062915
- US-A- 5 925 552
- US-A1- 2004 011 252

## Beschreibung

Die vorliegende Erfindung betrifft eine Stabilisatorzusammensetzung für halogenhaltige Polymere umfassend eine Guanidin-Verbindung oder eine Melamin-Verbindung oder ein Gemisch aus zwei oder mehr dieser Verbindungen und eine weitere Stickstoff enthaltende Verbindung oder ein Gemisch aus zwei oder mehr weiteren Stickstoff enthaltenden Verbindungen. Erfindungsgemäß stabilisierte Polymere zeichnen sich insbesondere durch eine verbesserte Anfangsfarbe sowie eine verbesserte Farbhaltung aus.

Bekanntermaßen neigen halogenhaltige Kunststoffe bei thermischer Belastung während der Verarbeitung oder im Langzeitgebrauch zu unerwünschten Zersetzungs- und Abbaureaktionen. Bei dem Abbau halogenierter Polymerer, insbesondere bei PVC, entsteht Salzsäure, die aus dem Polymerstrang eliminiert wird, woraus ein verfärbter, ungesättigter Kunststoff mit farbgebenden Polyensequenzen resultiert.

Besonders problematisch wirkt sich dabei aus, dass halogenhaltige Polymere erst bei einer relativ hohen Verarbeitungstemperatur die zur Verarbeitung notwendigen rheologischen Rahmenbedingungen aufweisen. Bei derartigen Temperaturen setzt jedoch bei unstabilisierten Polymeren bereits eine merkliche Zersetzung des Polymeren ein, die sowohl zu der oben beschriebenen unerwünschten Farbänderung, als auch zu einer Änderung der Materialeigenschaften führt. Darüber hinaus kann die aus nicht stabilisierten, halogenhaltigen Polymeren bei einer derartigen Verarbeitungstemperatur freigesetzte Salzsäure zu einer merklichen Korrosion der Verarbeitungsanlagen führen. Dieser Vorgang spielt insbesondere dann eine Rolle, wenn es bei der Verarbeitung derartiger halogenierter Polymerer zu Formkörpern, beispielsweise durch Extrusion, zu Produktionsunterbrechungen kommt und die Polymermasse für eine längere Zeitdauer im Extruder verweilt. Während dieser Zeit kann es zu den oben genannten Zersetzungsreaktionen kommen, wodurch die im Extruder befindliche Charge unbrauchbar wird und der Extruder gegebenenfalls geschädigt wird.

Weiterhin neigen Polymere, die einer derartigen Zersetzung unterworfen sind dazu, Anhaftungen an den Verarbeitungsanlagen zu bilden, die nur schwierig wieder zu entfernen sind. Die genannten Probleme werden üblicherweise durch den Einsatz von Stabilisatoren gelöst, die dem halogenhaltigen Polymeren vor oder während der Verarbeitung zugegeben werden. Zu derartigen, bekannten Stabilisatoren zählen beispielsweise die Blei-Stabilisatoren, Barium-Stabilisatoren, Cadmium-Stabilisatoren, Organozinn-Stabilisatoren sowie Barium-Cadmium-, Barium-Zink- oder Calcium-Zink-Stabilisatoren.

Neben den hier geschilderten Problemen, die in einer frühen Phase der Herstellung von Formkörpern aus halogenhaltigen Polymeren auftreten, sind jedoch für die Gebrauchseigenschaften eines derartigen Formkörpers über einen längeren Zeitraum Farbstabilität und möglichst unveränderte Materialeigenschaften wichtig. Insbesondere bei Formkörpern, die Licht, wechselnden Temperaturen oder anderen äußeren Einflüssen ausgesetzt sind, kommt es mit zunehmender Gebrauchsdauer zu Veränderungen der Farbe und der Materialeigenschaften, die gegebenenfalls bis zur Unbrauchbarkeit des Formkörpers fortschreiten können.

Die Verwendung der aus dem Stand der Technik bekannten, schwermetallhaltigen Stabilisatoren stößt jedoch bei der verarbeitenden Industrie und beim Anwender aus verschiedenen Gründen auf Ablehnung.

Um dem Problem der Anfangsfarbe und dem Problem der Farbstabilität entgegenzuwirken, wurden in der Vergangenheit organische Stabilisatorkombinationen eingesetzt, die zum einen während der Verarbeitungsphase zum Formkörper und zum anderen im Langzeitgebrauch den Veränderungen von Farbe und Materialeigenschaften entgegenwirken sollen.

So beschreibt beispielsweise die FR-A 2 491 480 eine Stabilisatorkombination, die ein Dihydropyridin und ein Derivat der Aminocrotonsäure enthält. Problematisch wirkt sich bei der beschriebenen Stabilisatorkombination aus, dass ihre Wirkung im Hinblick auf die Anfangsfarbe während der Verarbeitung in manchen Fällen zu wünschen übrig lässt.

Die DE-A 1 569 056 betrifft eine stabilisierte Formmasse. Beschrieben wird eine Formmasse, die aus einem Polymerisat oder Mischpolymerisat des Vinylchlorids und einer Stabilisatorkombination aus einem mono- oder diaromatisch substituierten Harnstoff oder Thioharnstoff und einem organischen Phosphit besteht. Die Stabilisatorkombination kann weiterhin noch Magnesiumoxid oder Magnesiumstearat enthalten. Problematisch wirkt sich bei der beschriebenen Formmasse jedoch aus, dass ihre Farbstabilität oft zu wünschen übrig lässt.

Die deutsche Patentschrift 746 081 betrifft ein Verfahren zur Verbesserung der Hitzebeständigkeit von hochpolymeren halogenhaltigen Stoffen. Beschrieben wird die Stabilisierung von halogenhaltigen Polymeren mit alkalisch wirkenden Mitteln zusammen mit Aminen oder Carbamiden, die ein bewegliches, durch Alkali ersetzbares Wasserstoffatom besitzen. Problematisch wirkt sich bei dem beschriebenen Verfahren jedoch aus, dass die Anfangsfarbe der beschriebenen hochpolymeren halogenhaltigen Stoffe zu wünschen übrig lässt. Außerdem verlieren die beschriebenen Stabilisatoren bei Temperaturen oberhalb von 160°C ihre Wirkung.

Die DE-C 36 36 146 betrifft ein Verfahren zur Stabilisierung chlorhaltiger Harze. Bei dem beschriebenen Verfahren werden einem polymerisierten Harz ein Aminocrotonsäureester und eine metallionenfreie Epoxyverbindung zugesetzt. Nachteilig wirkt sich bei dem beschriebenen Verfahren jedoch aus, dass die Anfangsfarbe der Harze gehobenen Anforderungen in vielen Fällen nicht entspricht.

Die US-A, 5,872,166 betrifft PVC-Stabilisatoren die eine überbasische Mischung von Salzen unsubstituierter oder alkylsubstituierter Benzoesäuren gegebenenfalls mit einer oder mehreren aliphatischen Fettsäuren, einem Carbonat- oder Silikatstabilisator und gegebenenfalls einem oder mehreren Polyolen mit 2 bis 10 OH-Gruppen, enthalten. Nachteilig wirkt sich bei dem beschriebenen Stabilisator jedoch häufig die mangelnde Stabilisierung im Hinblick auf die Anfangsfarbe aus.

Die US 2004/0011252 A1 befasst sich mit Pigmenten, die der Verhinderung von Korrosion dienen. Die US 2004/0011252 A1 offenbart eine Vielzahl von Metallionen und Metallverbindungen sowie eine umfangreiche Zahl von Verbindungen, die zur Komplexbildung mit derartigen Metallionen geeignet sind.

Die EP 1348 542 A1 befasst sich mit brandgeschützten Polyisocyanurat, Polyisocyanuratimid- oder Polyimidschaumstoffen enthaltenden Verbundsystemen. Als Flammhemmer kann beispielsweise Melaminphosphat eingesetzt werden.

Die WO 02/062915 A1 betrifft ein Verfahren zur Herstellung von Papier, das beim Zerreißen, Pressen, Anfassen oder Falten Licht aussendet. Dazu wird Papier mit einem tribolumineszenten Material beschichtet.

Die WO 02/062914 A1 befasst sich ebenfalls mit der tribolumineszenten Ausrüstung von Papier.

Die WO 99/48997 A1 betrifft die Stabilisierung organischer Materialien. Bei den organischen Materialien handelt es sich insbesondere um Polyolefine, wobei als Stabilisatoren mindestens ein monomeres oder oligomeres organisches Bisphosphit und mindestens eine Verbindung des Benzofuran-2-on-Typs oder α-Tocopherol zugegeben werden.

Die US 5,925,552 betrifft ein Verfahren zur Herstellung und Beschichtung eines immobilisierten Biomoleküls auf der Oberfläche eines medizinischen Gerätes.

Es bestand daher ein Bedürfnis nach einer Stabilisatorkombination für halogenierte Polymere, die frei von Schwermetallen ist und trotzdem eine ausgezeichnete Anfangsfarbe und Farbstabilität bewirkt. Ein besonderes Bedürfnis bestand nach einer Stabilisatorkombination, die bei der Herstellung von Formkörpern aus halogenhaltigen Polymeren eine gute Anfangsfarbe gewährleistet und die auch bei kurzzeitigen Produktionsunterbrechungen und einer damit einhergehenden höheren thermischen Belastung des Werkstoffs erhalten bleibt. Weiterhin bestand ein Bedürfnis nach einer Stabilisatorkombination, die auch eine gute Farbhaltung im Langzeitgebrauch eines aus einem halogenhaltigen Polymeren hergestellten Formkörpers ermöglicht.

Der vorliegenden Erfindung lag damit die Aufgabe zugrunde, Stabilisatorkombinationen für halogenhaltige Polymere zur Verfügung zustellen, welche die oben genannten Bedürfnisse befriedigen. Weiterhin lag der vorliegenden Erfindung die Aufgabe zugrunde, ein Verfahren zur Stabilisierung halogenhaltiger Polymerer zur Verfügung zustellen. Darüber hinaus lag der vorliegenden Erfindung die Aufgabe zugrunde, Polymerzusammensetzungen zur Verfügung zu stellen, welche eine gute Anfangsfarbe und eine gute Farbstabilität aufweisen.

Die der Erfindung zugrunde liegenden Aufgaben werden durch eine Stabilisatorzusammensetzung, ein Verfahren zur Stabilisierung halogenhaltiger Polymerer und eine Polymerzusammensetzung gelöst, wie sie im nachfolgenden Text beschrieben sind.

Gegenstand der vorliegenden Erfindung ist eine Stabilisatorzusammensetzung umfassend eine Guanidin-Verbindung oder eine Melamin-Verbindung oder ein Gemisch aus zwei oder mehr dieser Verbindungen und eine weitere Stickstoff enthaltende Verbindung oder ein Gemisch aus zwei oder mehr weiteren Stickstoff enthaltenden Verbindungen, wobei eine weitere Stickstoff, enthaltende Verbindung ein Carbazol oder ein Carbazol-Derivat oder 2,4-Pyrrolidindion oder ein 2,4-Pyrrolidindion-Derivat oder ein heterozyklischer Aminoalkohol oder eine Verbindung mit einem Strukturelement der allgemeinen Formel I 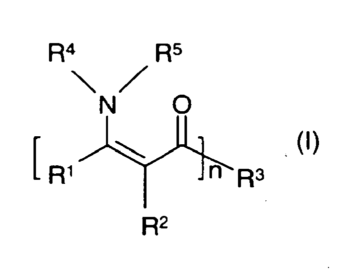 ist, worin n für eine Zahl von 1 bis 100.000, die Reste R¹, R², R⁴ und R⁵ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R¹ für einen gegebenenfalls substituierten Acylrest mit 2 bis 44 C-Atomen steht oder die Reste R¹ und R² zu einem aromatischen oder heterocyclischen System verbunden sind und worin der Rest R³ für Wasserstoff, einen gegebenenfalls substituierten, linearen oder verzweigten, gesättigten oder ungesättigten aliphatischen Alkyl-oder Alkylenrest oder Oxyalkyl- oder Oxyalkylenrest oder Mercaptoalkyl- oder Mercaptoalkylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl-oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, NR⁴ oder CH₂C(O) mit dem in Klammern stehenden Strukturelement verbunden ist, steht oder der Rest R³ mit dem Rest R¹ so verbunden ist, dass insgesamt ein gegebenenfalls substituiertes, gesättigtes oder ungesättigtes heterocyclisches Ringsystem mit 4 bis 24 C-Atomen gebildet wird, oder ein Aminouracil-Derivat.

Unter einer "Stabilisatorzusammensetzung" wird im Rahmen der vorliegenden Erfindung eine Stabilisatorzusammensetzung verstanden, die zur Stabilisierung halogenhaltiger Polymerer eingesetzt werden kann. Zur Erzielung dieses Stabilisierungseffekts wird eine erfindungsgemäße Stabilisatorzusammensetzung in der Regel mit einem zur Stabilisierung vorgesehenen, halogenhaltigen Polymeren vermischt und anschließend verarbeitet. Es ist jedoch ebenso möglich, eine erfindungsgemäße Stabilisatorzusammensetzung dem zu stabilisierenden, halogenhaltigen Polymeren während der Verarbeitung beizumischen.

Eine erfindungsgemäße Stabilisatorzusammensetzung weist mindestens zwei Bestandteile auf. Als einen ersten Bestandteil enthält eine erfindungsgemäße Stabilisatorzusammensetzung mindestens eine Stickstoff-Verbindung. Eine erfindungsgemäß geeignete Stickstoff-Verbindung ist beispielsweise eine Guanidin-Verbindung der Formel II 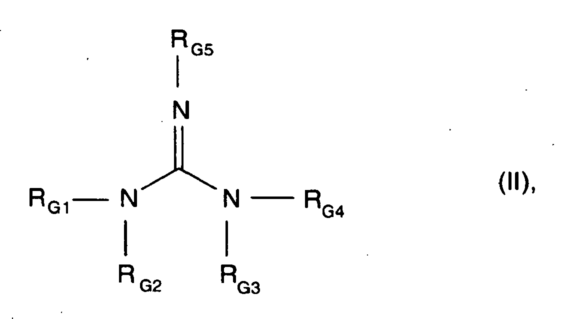 worin die Reste R_{G1}, R_{G2}, R_{G3}, R_{G4} und R_{G5} jeweils unabhängig voneinander für Wasserstoff, einen gegebenenfalls substituierten, linearen oder verzweigten, gesättigten oder ungesättigten aliphatischen Alkylrest mit 1 bis 44 C-Atomen, einen gegebenenfalls substituierten, gesättigten oder ungesättigten Cycloalkylrest mit 6 bis 44 C-Atomen oder einen gegebenenfalls substituierten Alkoxylrest mit 1 bis 44 C-Atomen oder einen durch ein oder mehrere O-Atome -O-unterbrochenen, linearen oder verzweigten Alkylrest mit 2 bis 44 C-Atomen oder einen gegebenenfalls substituierten Arylrest mit 6 bis 44 C-Atomen oder einen gegebenenfalls substituierten Aralkylrest mit 7 bis 44 C-Atomen oder einen gegebenenfalls substituierten Alkarylrest mit 7 bis 44 C-Atomen oder einen gegebenenfalls substituierten Acylrest mit 2 bis 44 C-Atomen oder eine Cyanogruppe -CN stehen, oder zwei oder mehr der Reste R_{G1}, R_{G2}, R_{G3}, R_{G4}, R_{G5} zu einem gegebenenfalls substituierten, gesättigten oder ungesättigten, mindestens ein N-Atom enthaltenden heterocyclischen Rest, beispielsweise zu einem mindestens ein N-Atom enthaltenden Cycloalkylrest mit 4 bis 44 C-Atomen oder zu einem mindestens ein N-Atom enthaltenden Arylrest mit 4 bis 44 C-Atomen oder zu einem gegebenenfalls substituierten, mindestens ein N-Atom enthaltenden Aralkylrest mit 5 bis 44 C-Atomen, verbunden sind.

Im Rahmen weiterer Ausführungsformen der vorliegenden Erfindung werden in den erfindungsgemäßen Stabilisatorzusammensetzungen Verbindungen der Formel II eingesetzt, bei denen beispielsweise die Reste R_{G1}, R_{G2}, R_{G3}, R_{G4} und R_{G5} jeweils unabhängig voneinander für einen linearen oder verzweigten Alkylrest mit 1 bis 12 C-Atomen, beispielsweise Methyl, Ethyl, n-Propyl, i-Propyl, n- Butyl, i- Butyl, sec- Butyl, tert-Butyl, Pentyl oder Hexyl, Heptyl, Octyl, 2-Ethlylhexyl, i-Octyl, Nonyl, Decyl, Undecyl oder Dodecyl, einen mit OH-Gruppen substituierten linearen oder verzweigten Alkylrest mit 1 bis 6 C-Atomen, beispielsweise Hydroxymethyl, Hydroxyethyl, Hydroxypropyl, Hydroxybutyl, Hydroxypentyl oder Hydroxyhexyl, einen mit NH₂-Gruppen substituierten linearen oder verzweigten Alkylrest mit 1 bis 6 C-Atomen, beispielsweise Aminomethyl, Aminoethyl, Aminopropyl, Aminobutyl, Aminopentyl oder Aminohexyl, einen mit Cyano-Gruppen substituierten linearen oder verzweigten Alkylrest mit 1 bis 6 C-Atomen, beispielsweise Cyanomethyl, Cyanoethyl, Cyanopropyl, Cyanobutyl, Cyanopentyl oder Cyanohexyl, einen durch ein oder mehrere O-Atome -O- unterbrochenen, linearen oder verzweigten Alkylrest mit 2 bis 10 C-Atomen, beispielsweise Methoxymethyl, Methoxyethyl, Methoxypropyl, Methoxybutyl, Methoxyhexyl, Methoxyoctyl, Ethoxymethyl, Ethoxyethyl, Ethoxypropyl, Ethoxybutyl, Ethoxyhexyl, Ethoxyoctyl, n-Propoxymethyl, n-Propoxyethyl, n-Propoxypropyl, n-Propoxybutyl, n-Propoxyhexyl, n-Propoxyoctyl, i-Propoxymethyl, i-Propoxyethyl, i-Propoxypropyl, i-Propoxybutyl, i-Propoxyhexyl, i-Propoxyoctyl, n-Butoxymethyl, n-Butoxyethyl, n-Butoxypropyl, n-Butoxybutyl, n-Butoxyhexyl, n-Butoxyoctyl, i-Butoxymethyl, i-Butoxyethyl, i-Butoxypropyl, i-Butoxybutyl, i-Butoxyhexyl, i-Butoxyoctyl, tert-Butoxymethyl, tert-Butoxyethyl, tert-Butoxypropyl, tert-Butoxybutyl, tert-Butoxyhexyl, tert-Butoxyoctyl, -CH₂-O-CH₂-CH₂-O-CH₃, -CH₂-O-CH₂-CH₂-CH₂-O-CH₃, -CH₂-O-CH₂-CH₂-CH₂-CH₂-O-CH₃, -CH₂-CH₂-O-CH₂-CH₂-O-CH₂-CH₃ oder -CH₂-CH₂-O-CH₂-CH₂-O-CH₂-CH₂-O-CH₂-CH₃, einen Cycloalkylrest mit 5 bis 8 C-Atomen, beispielsweise Cyclopentyl, Cyclohexyl, Cycloheptyl oder Cyclooctyl, einen Aralkylrest mit 7 bis 10 C-Atomen, beispielsweise Benzyl, 1- oder 2-Phenylethyl, 3-Phenylpropyl, α,α-Dimethylbenzyl oder 2-Phenylisopropyl, wobei die genannten Aralkylreste beispielsweise mit Halogenatomen, Methyl-, Ethyl-, Hydroxy-, Methoxy-, Ethoxy-, Amino- oder Cyanogruppen substituiert sein können, einen Aralkylrest mit 7 bis 10 C-Atomen, beispielsweise Tolyl oder Mesityl oder einen Alkenylrest mit 3 bis 6 C-Atomen, beispielsweise Vinyl, Allyl, Methallyl, 1-Butenyl, 2-Butenyl, 3-Butenyl, i-Butenyl, 1-Pentenyl, 2-Pentenyl, 3-Pentenyl, 4-Pentenyl, 1-Hexenyl, 2-Hexenyl, 3-Hexenyl, 4-Hexenyl, 5-Hexenyl, oder eine deren Isomeren oder eine Cyanogruppe stehen.

Im Rahmen einer bevorzugten Ausführungsform der vorliegenden Erfindung werden in den erfindungsgemäßen Stabilisatorzusammensetzungen Verbindungen der allgemeinen Formel II eingesetzt, worin mindestens einer der Reste R_{G1}, R_{G2}, R_{G3}, R_{G4} oder R_{G5} eine Cyanogruppe bedeutet. Beispiele sind Verbindungen der Formel II, in denen die Reste R_{G1}, R_{G2}, R_{G3}, R_{G4} und R_{G5}, oder die Reste R_{G1}, R_{G2}, R_{G3} und R_{G4}, oder die Reste R_{G1}, R_{G2}, R_{G4} und R_{G5}, oder die Reste R_{G1}, R_{G2} und R_{G4}, oder die Reste R_{G1}, R_{G2} und R_{G5}, oder die Reste R_{G1} und R_{G2}, oder die Reste R_{G1}, R_{G4} und R_{G5}, oder die Reste die Reste R_{G1} und R_{G4} jeweils für eine Cyanogruppe stehen und die Reste R_{G1}, R_{G2}, R_{G3}, R_{G4} und R_{G5}, die nicht für eine Cyanogruppe stehen, vorzugsweise Wasserstoff oder einen linearen, unsubstituierten Alkylrest mit 1 bis 44 C-Atomen, beispielsweise mit 1, 2, 3, 4, 5, 6, 7, 8, 9 oder 10 C-Atomen, bedeuten.

Im Rahmen weiterer Ausführungsform enthält eine Stabilisatorzusammensetzung als Stickstoff-Verbindung eine Cyanoguanidin-Verbindung gemäß Formel III:

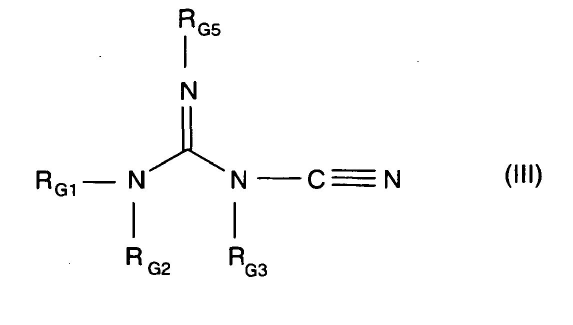

In Formel III haben die Reste R_{G1}, R_{G2}, R_{G3} und R_{G5} dieselbe Bedeutung wie unter Formel II definiert, wobei wiederum zwei oder mehr der Reste R_{G1}, R_{G2}, R_{G3}, R_{G5} zu gegebenenfalls substituierten, gesättigten oder ungesättigten, mindestens ein N-Atom enthaltenden heterocyclischen Resten verbunden sein können. Im Rahmen spezieller Ausführungsformen der vorliegenden Erfindung werden Cyanoguanidin-Verbindungen eingesetzt, in denen der Rest R_{G1} für einen linearen, unsubstituierten Alkylrest mit 1 bis 44 C-Atomen, beispielsweise mit 1, 2, 3, 4, 5, 6, 7, 8, 9 oder 10 C-Atomen, steht und die Reste R_{G2}, R_{G3} und R_{G5} jeweils Wasserstoff bedeuten. Beispiele sind N-Cyano-N'-methylguanidin, N-Cyano-N'-ethylguanidin, N-Cyano-N'-propylguanidin, N-Cyano-N'-butytguanidin, N-Cyano-N'-pentylguanidin und N-Cyano-N'-hexylguanidin.

Im Rahmen einer bevorzugten Ausführungsform der vorliegenden Erfindung wird Cyanoguanidin eingesetzt, mithin bedeuten in diesem Falle die Reste R_{G1}, R_{G2}, R_{G3} und R_{G5} gemäß Formel III jeweils Wasserstoff.

Es ist im Rahmen der vorliegenden Erfindung weiterhin möglich und vorgesehen, Guanidin-Verbindungen und insbesondere Cyanoguanidin-Verbindungen beispielsweise in Form von Salzen oder Hydraten oder Komplexverbindungen einzusetzen. Beispiele für solche Verbindungen sind Guanidinmonohydrat, Guanidiniumfluorid, Guanidiniumchlorid, Guanidiniumbromid, Guanidiniumiodid, Guanidiniumnitrat, Guanidiniumsulfat, Guanidiniumphosphat, Guanidiniumperchlorat, Guanidiniumpikrat, Guanidinium-Oxalat, Cyanoguanidinmonohydrat, Cyanoguanidiniumfluorid, Cyanoguanidiniumchlorid, Cyanoguanidiniumbromid, Cyanoguanidiniumiodid, Cyanoguanidiniumnitrat, Cyanoguanidiniumsulfat, Cyanoguanidiniumphosphat, Cyanoguanidiniumperchlorat, Cyanoguanidinium-Oxalat.

Im Rahmen einer weiteren Ausführungsform der vorliegenden Erfindung werden Stickstoff-Verbindungen gemäß Formel II eingesetzt, wobei zwei oder mehr der Reste R_{G1}, R_{G2}, R_{G3}, R_{G4}, R_{G5} zu einem gegebenenfalls substituierten, gesättigten oder ungesättigten, mindestens ein N-Atom enthaltenden heterocyclischen Rest, beispielsweise zu einem mindestens ein N-Atom enthaltenden Cycloalkylrest mit 4 bis 44 C-Atomen oder zu einem mindestens ein N-Atom enthaltenden Arylrest mit 4 bis 44 C-Atomen oder zu einem gegebenenfalls substituierten, mindestens ein N-Atom enthaltenden Aralkylrest mit 5 bis 44 C-Atomen, verbunden sind.

Erfindungsgemäß geeignete Reste heterocyclischer Stickstoff-Verbindungen leiten sich beispielsweise ab von Derivaten der Verbindungen Acridan, Acridon, Adenin, Alloxan, Azepin, Aziridin, Barbitursäure, Benedorm, Benzimidazol, ε-Caprolactam, Carbazol, Chinazolinon, Chinazolon, Cytosin, Diaziridin, Glutethimid, Gramin, Guanin, Evipan, Harnsäure, Hydantoin, Imidazol, Indazol, Indol, Indophenin, Indoxyl, Isatin, Isoindol, Isothiazol, Isoxazol, Luminal, Luminol, Morpholin, Oxazin, Oxaziridin, Oxazol, Oxazolidon, Oxazolin, Δ²-Oxazolin, Oxindol, Parabansäure, Pentazol, Phanodorm, Phenanthridon, Phenothiazin, Phenoxazin, Piperazin, Piperidin, Porphin, Porphyrin, Prolin, Pterin, Purin, Pyrimidin, Pyrazol, Pyrrol, Pyrrolidin, Pyrrolidon, Δ³-Pyrrolin, Rhodanin, Tetrazol, Thiazin, Thiadiazin, Thiazol, Thiouracil, 1.2.3-Triazol, 1.2.4-Triazol, Thymin, Tryptamin, Tryptophan, Uracil, Veronal, Xanthin.

Im Rahmen einer bevorzugten Ausführungsform werden erfindungsgemäße Stickstoff-Verbindungen mit mindestens ein N-Atom enthaltenden, aromatischen Cycloalkylresten eingesetzt.

Gemäß einer speziellen Ausführungsform der vorliegenden Erfindung geeignete Stickstoff-Verbindungen mit mindestens einem, mindestens ein N-Atom enthaltenden heterocyclischen Rest gemäß Formel II sind beispielsweise Imidazol-Verbindungen der Formel IV:

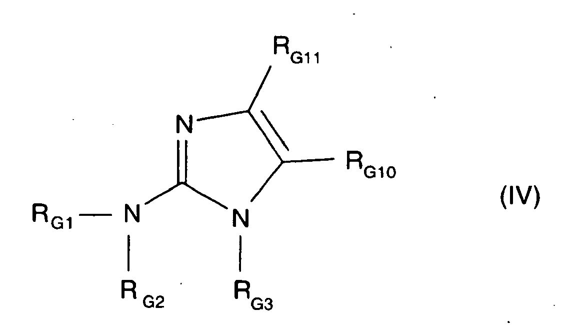

In Formel IV haben die Reste R_{G10} und R_{G11} dieselbe Bedeutung wie der Rest R_{G1} und die Reste R_{G1}, R_{G2} und R_{G3} dieselbe Bedeutung wie unter Formel II definiert, wobei wiederum zwei oder mehr der Reste R_{G1}, R_{G2}, R_{G3}, R_{G10}, R_{G11} zu gegebenenfalls substituierten, gesättigten oder ungesättigten, mindestens ein N-Atom enthaltenden heterocyclischen Resten verbunden sein können.

Weitere erfindungsgemäß im Rahmen spezieller Ausführungsformen geeignete Stickstoff-Verbindungen mit mindestens einem, mindestens ein N-Atom enthaltenden heterocyclischen Rest gemäß Formel II sind beispielsweise Verbindungen der Formel V:

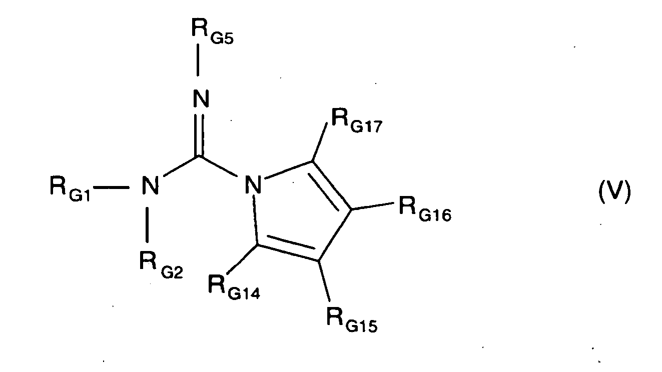

In Formel V haben die Reste R_{G1}, R_{G2} und R_{G5} dieselbe Bedeutung wie unter Formel II definiert, wobei zwei oder mehr der Reste R_{G1}, R_{G2}, R_{G5} zu gegebenenfalls substituierten, gesättigten oder ungesättigten, mindestens ein N-Atom enthaltenden heterocyclischen Resten verbunden sein können und die Reste R_{G14}, R_{G15}, R_{G16} und R_{G17} jeweils unabhängig voneinander für Wasserstoff, einen gegebenenfalls substituierten, linearen oder verzweigten, gesättigten oder ungesättigten aliphatischen Alkylrest mit 1 bis 44 C-Atomen, einen gegebenenfalls substituierten, gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen oder einen gegebenenfalls substituierten Acylrest mit 2 bis 44 C-Atomen oder eine Cyanogruppe -CN stehen, oder zwei oder mehr der Reste R_{G14}, R_{G15}, R_{G16}, R_{G17} zu einem gegebenenfalls substituierten, gesättigten oder ungesättigten Cycloalkylrest mit 6 bis 44 C-Atomen oder einem Arylrest mit 6 bis 44 C-Atomen oder einem Aralkylrest mit 7 bis 44 C-Atomen, verbunden sind.

Spezielle erfindungsgemäß geeignete Stickstoff-Verbindungen mit mindestens einem, mindestens ein N-Atom enthaltenden heterocyclischen Rest gemäß Formel V sind beispielsweise Carbazol-Verbindungen der Formel VI:

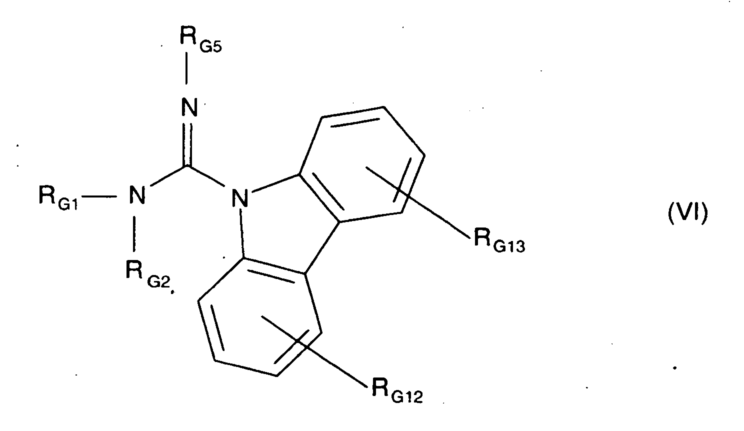

In Formel VI haben die Reste R_{G1}, R_{G2} und R_{G5} dieselbe Bedeutung wie unter Formel II definiert, wobei zwei oder mehr der Reste R_{G1}, R_{G2}, R_{G5} zu gegebenenfalls substituierten, gesättigten oder ungesättigten, mindestens ein N-Atom enthaltenden heterocyclischen Resten verbunden sein können, und die Reste R_{G12} und R_{G13} jeweils unabhängig voneinander für Wasserstoff, einen linearen oder verzweigten, gesättigten oder ungesättigten, gegebenenfalls substituierten Alkylrest mit 1 bis 24 C-Atomen, einen gesättigten oder ungesättigten, gegebenenfalls substituierten Cycloalkylrest mit 6 bis 24 C-Atomen oder einen gegebenenfalls substituierten Arylrest mit 6 bis 24 C-Atomen stehen.

Weitere erfindungsgemäß im Rahmen spezieller Ausführungsformen geeignete Stickstoff-Verbindungen mit mindestens einem, mindestens ein N-Atom enthaltenden heterocyclischen Rest sind beispielsweise Melamin-Verbindungen der Formel VII:

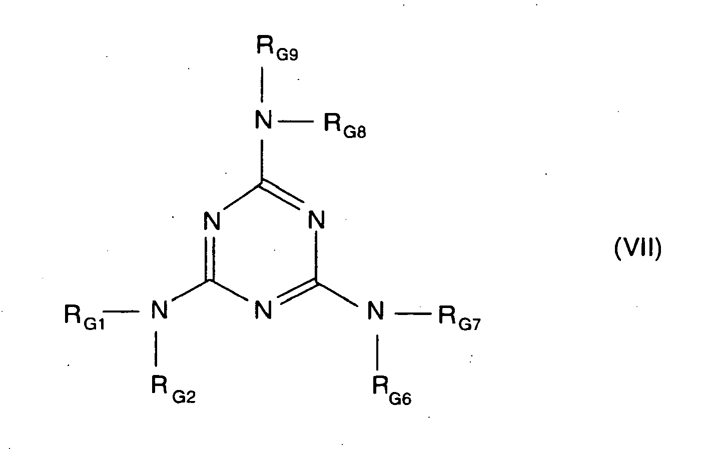

In Formel VII haben die Reste R_{G6}, R_{G7}, R_{G8} und R_{G9} dieselbe Bedeutung wie der Rest R_{G1} und die Reste R_{G1} und R_{G2} dieselbe Bedeutung wie unter Formel II definiert, wobei wiederum zwei oder mehr der Reste R_{G1}, R_{G2}, R_{G6}, R_{G7}, R_{G8}, R_{G9} zu gegebenenfalls substituierten, gesättigten oder ungesättigten, mindestens ein N-Atom enthaltenden heterocyclischen Resten verbunden sein können.

Der Anteil einer Stickstoff-Verbindung oder eines Gemischs aus zwei oder mehr Stickstoff-Verbindungen an der erfindungsgemäßen Stabilisatorzusammensetzung beträgt etwa 0,01 bis etwa 99,99 Gew.-%, beispielsweise etwa 0,1 bis etwa 90 Gew.-% oder etwa 1 bis etwa 85 Gew.-% oder etwa 5 bis etwa 80 Gew.-% oder etwa 10 bis etwa 70 Gew.-%. Weiterhin geeignete Mengen liegen etwa in einem Bereich von etwa 15 bis etwa 65 Gew.-% oder etwa 20 bis etwa 60 Gew.-%, jeweils bezogen auf die gesamte Stabilisatorzusammensetzung. Enthält eine erfindungsgemäße Stabilisatorzusammensetzung mehr als zwei Bestandteile, so kann der Anteil einer Stickstoff-Verbindung oder eines Gemischs aus zwei oder mehr Stickstoff-Verbindungen an einer solchen erfindungsgemäßen Stabilisatorzusammensetzung beispielsweise im Bereich von etwa 0,01 bis etwa 99,99 Gew.-% liegen, beispielsweise etwa 0,05 bis etwa 50 Gew.-% oder etwa 0,1 bis etwa 40 Gew.-% oder etwa 1 bis etwa 35 Gew.-% oder etwa 1,5 bis etwa 30 Gew.-% oder etwa 2 bis etwa 25 Gew.-%, jeweils bezogen auf die gesamte Stabilisatorzusammensetzung.

Als einen zweiten Bestandteil enthält eine erfindungsgemäße Stabilisatorzusammensetzung mindestens eine weitere Stickstoff enthaltende Verbindung oder ein Gemisch aus zwei oder mehr weiteren Stickstoff enthaltenden Verbindungen. Erfindungsgemäß als weitere Stickstoff enthaltende Verbindung geeignet sind Carbazol, Carbazol-Derivate, 2,4-Pyrrolidindion, 2,4-Pyrrolidindion-Derivate, Aminoalkohole, insbesondere heterozyklische Aminoalkohole, Aminouracil-Derivate und Verbindungen mit einem Strukturelement der allgemeinen Formel I.

Als zweiter Bestandteil der erfindungsgemäßen Stabilisatorzusammensetzung eignen sich beispielsweise Carbazol oder Carbazolderivate oder Gemische aus zwei oder mehr davon.

Unter "Carbazol oder Carbazolderivaten" werden im Rahmen der vorliegenden Erfindung Verbindungen der allgemeinen Formel VIII 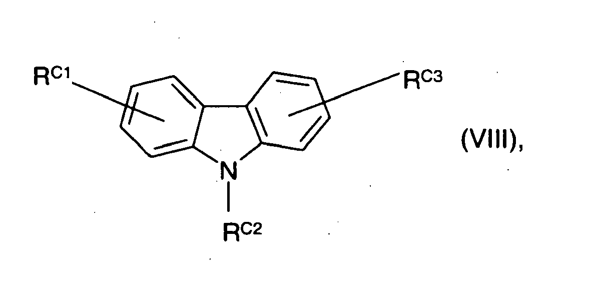 verstanden, worin die Reste R^{C1}, R^{C2} und R^{C3} jeweils unabhängig voneinander für Wasserstoff, einen linearen oder verzweigten, gesättigten oder ungesättigten, gegebenenfalls substituierten Alkylrest mit 1 bis 24 C-Atomen, einen gesättigten oder ungesättigten, gegebenenfalls substituierten Cycloalkylrest mit 6 bis 24 C-Atomen oder einen gegebenenfalls substituierten Arylrest mit 6 bis 24 C-Atomen stehen.

Im Rahmen einer weiteren Ausführungsform der vorliegenden Erfindung enthält eine erfindungsgemäße Stabilisatorzusammensetzung ein 2,4-Pyrrolidindion oder ein 2,4-Pyrrolidindion-Derivat. Unter einem "2,4-Pyrrolidindion" oder einem "2,4-Pyrrolidindion-Derivat" wird im Rahmen der vorliegenden Erfindung eine Verbindung der allgemeinen Formel IX 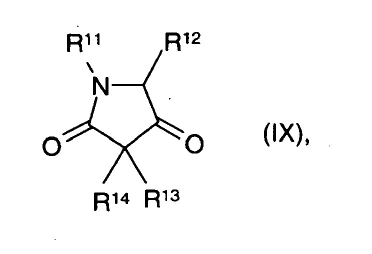 verstanden, worin die Reste R¹¹, R¹², R¹³ und R¹⁴ jeweils unabhängig voneinander für Wasserstoff, einen linearen oder verzweigten, gesättigten oder ungesättigten, gegebenenfalls substituierten Alkylrest mit 1 bis 24 C-Atomen, einen gesättigten oder ungesättigten, gegebenenfalls substituierten Cycloalkylrest mit 6 bis 24 C-Atomen oder einen gegebenenfalls substituierten Arylrest mit 6 bis 24 C-Atomen stehen.

Im Rahmen einer bevorzugten Ausführungsform der vorliegenden Erfindung enthält eine erfindungsgemäße Stabilisatorzusammensetzung eine Verbindung der allgemeinen Formel IX, worin R¹¹ für Phenyl, R¹² für Acetyl und R¹³ und R¹⁴ für Wasserstoff stehen.

Weiterhin als zweiter Bestandteil einer erfindungsgemäßen Stabilisatorzusammensetzung geeignet sind beispielsweise Aminoalkohole. Als Aminoalkohole sind im Rahmen der vorliegenden Erfindung grundsätzlich alle Verbindungen geeignet, die mindestens eine OH-Gruppe und eine primäre, sekundäre oder tertiäre Aminogruppe oder eine Kombination aus zwei oder mehr der genannten Aminogruppen aufweisen. Grundsätzlich sind im Rahmen der vorwiegenden Erfindung sowohl feste als auch flüssige Aminoalkohole als Bestandteil der erfindungsgemäßen Stabilisatorzusammensetzungen geeignet.

Erfindungsgemäß geeignete Aminoalkohole sind beispielsweise OH-Gruppen tragende Derivate von Monoaminoverbindungen mit 2 bis etwa 40, beispielsweise 6 bis etwa 20 C-Atomen oder von Diaminoverbindungen mit 2 bis etwa 40, beispielsweise 6 bis etwa 20 C-Atomen oder von Triaminoverbindungen mit 2 bis etwa 40, beispielsweise 6 bis etwa 20 C-Atomen. Weiterhin erfindungsgemäß einsetzbar sind beispielsweise substituierte Amine mit 2 bis etwa 20 C-Atomen.

Geeignete OH-Gruppen tragenden Derivate von Monoaminen weisen beispielsweise eine primäre, eine sekundäre oder eine tertiäre Aminogruppe auf. Beispiele für solche Monoamine sind Mono-, Di- oder Triethylamin, Mono-, Di-oder Tri-n-Propylamin, Mono-, Di- oder Tri-i-Propylamin, Mono-, Di- oder Tri-sec-Propylamin, Mono-, Di- oder Tri-n-Butylamin, Mono-, Di- oder Tri-sec-Butylamin, Mono-, Di- oder Tri-tert-Butylamin oder Mono-, Di- oder Trioctylamin, Trimethylamin, N-Methyl-, N-Ethyl-, N-Cyclohexylmorpholin, Dimethyleyclohexylamin, Dimethylbenzylamin, 1-Azabicyclo[3,3,0]octan. Geeignete OH-Gruppen tragende Derivate von Diaminen sind beispielsweise solche, die auf Diaminen mit einem Molekulargewicht von etwa 32 bis etwa 200 g/mol aufbauen. Geeignete OH-Gruppen tragenden Derivate von Diaminen weisen beispielsweise zwei primäre, zwei sekundäre, zwei tertiäre oder eine primäre und eine sekundäre oder eine primäre und eine tertiäre oder eine sekundäre und eine tertiäre Aminogruppe auf. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Dimorpholinodiethylether, 1,4-Diazabicyclo[2,2,2]octan, N,N,N',N`-Tetramethylethylendiamin, N,N,N',N'-Tetramethylbutandiamin, N,N,N',N'-Tetramethylhexandiamin-1,6, Tetramethyldiaminoethylether, 2-(N,N-Dimethylamino)-1-aminoethan, Di-(4-N,N-dimethylaminocyclohexyl)-methan, 1,2-Dimethylimidazol, N,N'-Dimethylpiperazin, Hydrazin, Hydrazinhydrat. Ebenfalls geeignet sind OH-Gruppen tragende Derivate von Triaminen. Solche Triamine weisen beispielsweise drei primäre, drei sekundäre, drei tertiäre oder zwei primäre und eine sekundäre oder eine tertiäre, zwei sekundäre und eine primäre oder tertiäre, zwei tertiäre und eine primäre oder sekundäre auf. Beispiele hierfür sind die Diethylentriamin, 1,8-Diamino-4-aminomethyloctan, Pentamethyldiethylentriamin. Weiterhin geeignet ist beispielsweise Bis-(dimethylaminopropyl)-harnstoff.

Besonders geeignet sind aliphatische Aminoalkohole mit 2 bis etwa 40, vorzugsweise 6 bis etwa 20 C-Atomen, beispielsweise 1-Amino-3,3-dimethyl-pentan-5-ol, 2-Aminohexan-2',2"-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Ämino-1-phenylethanol, 2-Phenylglycinol oder 2-Amino-1-phenyl-1,3-propandiol sowie Gemische aus zwei oder mehr solcher Verbindungen in Betracht kommen.

Im Rahmen einer weiteren Ausführungsform der vorliegenden Erfindung werden als Aminoalkohole heterocyclische Verbindungen eingesetzt, die über ein cyclisches, Aminogruppen aufweisendes Ringsystem verfügen, wobei die OH-Gruppen entweder direkt am Ring oder vorzugsweise über Spacer mit diesem verbunden sind. Es ist erfindungsgemäß vorgesehen, beispielsweise heterocyclische Aminoalkohole einzusetzen, die mindestens 2, vorzugsweise mindestens 3 Aminogruppen im Ring aufweisen. Als zentraler Ringbestandteil der erfindungsgemäß einsetzbaren Aminoalkohole besonders geeignet sind hierbei die Trimerisierungsprodukte von Isocyanaten.

Besonders bevorzugt werden dabei hydroxylgruppenhaltige Isocyanurate der allgemeinen Formel X 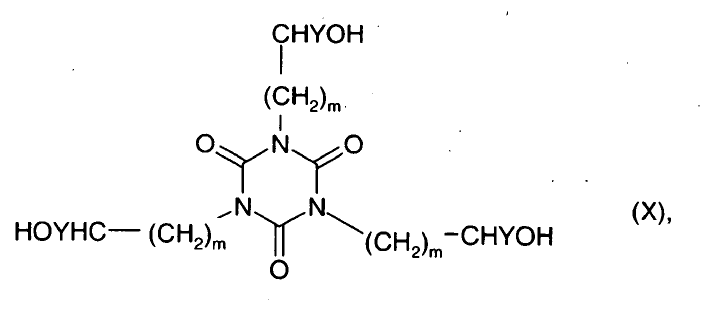 worin die Gruppen Y und die Indices m jeweils gleich oder verschieden sind und m für eine ganze Zahl von 0 bis 20 und Y für ein Wasserstoffatom oder eine lineare oder verzweigte, gesättigte oder ungesättigte Alkylgruppe mit 1 bis etwa 10 C-Atomen steht. Besonders bevorzugt ist im Rahmen der vorliegenden Erfindung der Einsatz von Tris(hydroxyethyl)isocyanurat (THEIC) als Bestandteil der erfindungsgemäßen Stabilisatorzusammensetzungen.

Eine erfindungsgemäße Stabilisatorzusammensetzung kann beispielsweise nur einen Aminoalkohol enthalten. Es ist im Rahmen der vorliegenden Erfindung jedoch ebenso vorgesehen, dass eine erfindungsgemäße Stabilisatorzusammensetzung ein Gemisch aus zwei oder mehr verschiedenen Aminoalkoholen enthält.

Ebenfalls als zweiter Bestandteil einer Stabilisatorzusammensetzung im Rahmen der vorliegenden Erfindung geeignet sind Verbindungen mit einem Strukturelement der allgemeinen Formel I 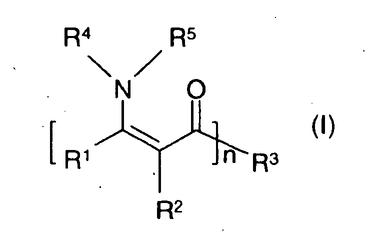 worin n für eine Zahl von 1 bis 100.000, die Reste R¹, R², R⁴ und R⁵ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R¹ für einen gegebenenfalls substituierten Acylrest mit 2 bis 44 C-Atomen steht oder die Reste R¹ und R² zu einem aromatischen oder heterocyclischen System verbunden sind und worin der Rest R³ für Wasserstoff, einen gegebenenfalls substituierten, linearen oder verzweigten, gesättigten oder ungesättigten aliphatischen Alkyl-oder Alkylenrest oder Oxyalkyl- oder Oxyalkylenrest oder Mercaptoalkyl- oder Mercaptoalkylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl-oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, NR⁴ oder CH₂C(O) mit dem in Klammern stehenden Strukturelement verbunden ist, steht oder der Rest R³ mit dem Rest R¹ so verbunden ist, dass insgesamt ein gegebenenfalls substituiertes, gesättigtes oder ungesättigtes heterocyclisches Ringsystem mit 4 bis 24 C-Atomen gebildet wird, oder ein Gemisch aus zwei oder mehr Verbindungen der allgemeinen Formel I.

Im Rahmen einer bevorzugten Ausfiihrungsform der vorliegenden Erfindung wird als Verbindung der allgemeinen Formel 1 eine auf einer α,β-ungesättigten β-Aminocarbonsäure, insbesondere eine auf β-Aminocrotonsäure basierende Verbindung, vorzugsweise ein β-Aminocrotonat, eingesetzt. Besonders geeignet sind hierbei die Ester oder Thioester der entsprechenden Aminocarbonsäuren mit einwertigen oder mehrwertigen Alkoholen oder Mercaptanen, wobei R³ in den genannten Fällen jeweils vorzugsweise für einen Oxyalkyl- oder Mercaptoalkylrest steht.

Wenn der Rest R³ für einen Alkohol- oder Mercaptanrest steht, so kann ein derartiger Rest beispielsweise aus Methanol, Ethanol, Propanol, Isopropanol, Butanol, 2-Ethylhexanol, Isooctanol, Isononanol, Decanol, Laurylalkohol, Myristylalkohol, Palmitylalkohol, Stearylalkohol, Ethylenglykol, Propylenglykol, 1,3-Butandiol, 1,4-Butandiol, 1,6-Hexandiol, 1,10-Decandiol, Diethylenglykol, Thio-Diethanol, Trimethylolpropan, Glycerin, Tris-(2-hydroxyethyl)-isocyanurat, Triethanolamin, Pentaerythrit, Di-Trimethylolpropan, Diglycerin, Sorbitol, Mannitol, Xylitol, Di-Pentaerythrit sowie den entsprechenden Mercaptoderivaten der genannten Alkohole gebildet werden.

Im Rahmen einer besonders bevorzugten Ausführungsform der vorliegenden Erfindung wird als Verbindung der allgemeinen Formel I eine Verbindung eingesetzt, in der R¹ für einen linearen Alkylrest mit 1 bis 4 C-Atomen, R² für Wasserstoff und R³ für einen linearen oder verzweigten, gesättigten, ein- bis sechswertigen Alkyl- oder Alkylenrest mit 2 bis 12 C-Atomen oder einen linearen, verzweigten oder cyclischen 2- bis 6-wertigen Etheralkoholrest oder Thioetheralkoholrest steht.

Geeignete Verbindungen der allgemeinen Formel 1 umfassen beispielsweise β-Aminocrotonsäurestearylester, 1,4-Butandiol-di(β-aminocrotonsäure)ester (BGAC), Thio-diethanol-β-aminocrotonsäureester, Trimethylolpropan-tri-βaminocrotonsäureester, Pentaerythrit-tetra-β-aminocrotonsäureester, Dipentaerythrit-hexa-β-aminocrotonsäureester und dergleichen. Die genannten Verbindungen können in einer erfindungsgemäßen Stabilisatorzusammensetzung jeweils alleine oder als Gemisch aus zwei oder mehr davon enthalten sein.

Ebenfalls im Rahmen der vorliegenden Erfindung als Verbindungen der allgemeinen Formel I geeignet sind Aminouracilverbindungen der allgemeinen Formel XI 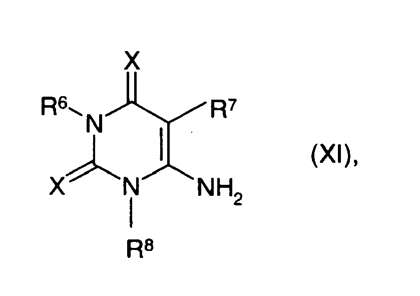 worin die Reste R⁶ und R⁷ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R⁶ für einen gegebenenfalls substituierten Acylrest mit 2 bis 44 C-Atomen steht oder die Reste R⁶ und R⁷ zu einem aromatischen oder heterocyclischen System verbunden sind und der Rest R⁸ für Wasserstoff, einen gegebenenfalls substituierten linearen oder verzweigten, gesättigten oder ungesättigten aliphatischen Kohlenwasserstoffrest mit 1 bis 44 C-Atomen, einen gegebenenfalls substituierten gesättigten oder ungesättigten cycloaliphatischen Kohlenwasserstoffrest mit 6 bis 44 C-Atomen oder einen gegebenenfalls substituierten aromatischen Kohlenwasserstoffrest mit 6 bis 44 C-Atomen und X für S oder O steht. Im Rahmen der vorliegenden Erfindung bevorzugt sind Aminouracile.

Im Rahmen einer weiteren bevorzugten Ausführungsform der vorliegenden Erfindung werden in den erfindungsgemäßen Stabilisatorzusammensetzungen Verbindungen der allgemeinen Formel XI eingesetzt, bei denen R⁶ und R⁸ für einen linearen oder verzweigten Alkylrest mit 1 bis 6 C-Atomen, beispielsweise Methyl, Ethyl, Propyl, Butyl, Pentyl oder Hexyl, einen mit OH-Gruppen substituierten linearen oder verzweigten Alkylrest mit 1 bis 6 C-Atomen, beispielsweise Hydroxymethyl, Hydroxyethyl, Hydroxypropyl, Hydroxybutyl, Hydroxypentyl oder Hydroxyhexyl, einen Aralkylrest mit 7 bis 9 C-Atomen, beispielsweise Benzyl, Phenylethyl, Phenylpropyl, Dimethylbenzyl oder Phenylisopropyl, wobei die genannten Aralkylreste beispielsweise mit Halogen, Hydroxy oder Methoxy substituiert sein können oder einen Alkenylrest mit 3 bis 6 C-Atomen, beispielsweise Vinyl, Allyl, Methallyl, 1-Butenyl oder 1-Hexenyl stehen.

Im Rahmen einer bevorzugten Ausführungsform der vorliegenden Erfindung werden in den erfindungsgemäßen Stabilisatorzusammensetzungen Verbindungen der allgemeinen Formel XI eingesetzt, worin R⁶ und R⁸ für Wasserstoff, Methyl, Ethyl, n-Propyl, Isopropyl, n-, i-, sec- oder tert-Butyl stehen.

Ebenfalls als Verbindungen der allgemeinen Formel I geeignet sind beispielsweise Verbindungen, in denen die Reste R¹ und R² zu einem aromatischen oder heteroaromatischen System verbunden sind, beispielsweise Aminobenzoesäure, Aminosalicylsäure oder Aminopyridincarbonsäure und deren geeignete Derivate.

Der Anteil einer weiteren Stickstoff enthaltenden Verbindung oder eines Gemischs aus zwei oder mehr weiteren Stickstoff enthaltenden Verbindungen an der erfindungsgemäßen Stabilisatorzusammensetzung beträgt etwa 0,01 bis etwa 99,99 Gew.-%, beispielsweise etwa 0,1 bis etwa 90 Gew.-% oder etwa 1 bis etwa 85 Gew.-% oder etwa 5 bis etwa 80 Gew.-% oder etwa 10 bis etwa 70 Gew.-%. Weiterhin geeignete Mengen liegen etwa in einem Bereich von etwa 15 bis etwa 65 Gew.-% oder etwa 20 bis etwa 60 Gew.-%, jeweils bezogen auf die gesamte Stabilisatorzusammensetzung. Enthält eine erfindungsgemäße Stabilisatorzusammensetzung mehr als zwei Bestandteile, so kann der Anteil einer weiteren Stickstoff enthaltenden Verbindung oder eines Gemischs aus zwei oder mehr weiteren Stickstoff enthaltenden Verbindungen an der erfindungsgemäßen Stabilisatorzusammensetzung beispielsweise im Bereich von etwa 0,01 bis etwa 99,99 Gew.-% liegen, beispielsweise etwa 0,05 bis etwa 50 Gew.-% oder etwa 0,1 bis etwa 40 Gew.-% oder etwa 1 bis etwa 35 Gew.-% oder etwa 1,5 bis etwa 30 Gew.-% oder etwa 2 bis etwa 25 Gew.-%, jeweils bezogen auf die gesamte Stabilisatorzusammensetzung.

Eine Stabilisatorzusammensetzung umfassend eine Guanidin-Verbindung oder eine Melamin-Verbindung oder ein Gemisch aus zwei oder mehr dieser Verbindungen und eine weitere Stickstoff enthaltende Verbindung oder ein Gemisch aus zwei oder mehr weiteren Stickstoff enthaltenden Verbindungen gemäß vorliegender Erfindung kann bereits ohne die Zugabe weiterer Zusatzstoffe zur Stabilisierung halogenhaltiger Polymerer eingesetzt werden. Häufig ist es jedoch vorteilhaft, zur Optimierung des Stabilisierungsvermögens diesen Bestandteilen weitere Zusatzstoffe zuzugeben. Die vorliegende Erfindung betrifft daher auch eine Stabilisatorzusammensetzung, die mindestens einen weiteren Zusatzstoff enthält.

Als weiterer Zusatzstoff eignet sich beispielsweise eine Brönstedt-Supersäure oder ein Salz einer Brönstedt-Supersäure oder ein Gemisch aus zwei oder mehr davon. Im Rahmen des vorliegenden Textes werden die Begriffe "Brönstedt-Supersäure" und "Supersäure" synonym verwendet. Unter einer "Supersäure" wird im Rahmen der vorliegenden Erfindung beispielsweise eine Säure verstanden, die acider ist als reine Schwefelsäure.

Die Acidität einer erfindungsgemäßen Supersäure kann beispielsweise in der Gasphase gemäß dem Gleichgewicht HA ↔ H⁺ + A als Gasphasenacidität bestimmt und durch die diesem Gleichgewicht entsprechende freie Enthalpie ΔG_{acid} quantifiziert werden. In diesem Zusammenhang sei beispielhaft auf I. A. Koppel et al. in J. Am. Chem. Soc., 1994, 116, 3047-3057 verwiesen. Auch kann in einigen Fällen die freie Enthalpie ΔG_{acid} berechnet werden. Hier sei beispielhaft auf I. A. Koppel et al. in J. Am. Chem. Soc,. 2000, 122, 5114-5124 verwiesen.

Eine erfindungsgemäß geeignete Supersäure weist beispielsweise einen ΔG_{acid}-Wert von kleiner oder gleich 320 kcal/mol oder kleiner oder gleich 316 kcal/mol oder kleiner oder gleich 312 kcal/mol oder kleiner oder gleich 310 kcal/mol oder kleiner oder gleich 308 kcal/mol oder kleiner oder gleich 307 kcal/mol oder kleiner oder gleich 306 kcal/mol oder kleiner oder gleich 305 kcal/mol.

Im Rahmen einer speziellen Ausführungsform enthält eine Stabilisatorzusammensetzung gemäß vorliegender Erfindung als mindestens eine Supersäure eine halogenhaltige Oxysäure, insbesondere Perchlorsäure, oder als mindestens ein Salz einer Supersäure ein Salz einer halogenhaltigen Oxysäure, insbesondere ein Perchlorat der allgemeinen Formel M(ClO₄)ₖ, wobei M für ein geeignetes anorganisches oder organisches Kation steht. Der Index k steht entsprechend der Wertigkeit von M für die Zahl 1, 2 oder 3. Erfindungsgemäß geeignete anorganische Kationen M sind beispielsweise Li, Na, K, Mg, Ca, Sr, Zn, Al, La, Ce oder NH₄.

Als erfindungsgemäß geeignete organische Kationen M sind beispielsweise organische Onium-lonen zu nennen, wobei unter dem Begriff "organisches Onium-Ion" im Rahmen des vorliegenden Textes Ammonium-, Sulfonium- oder Phosphonium-Ionen verstanden werden, die jeweils mindestens einen organischen Rest tragen. Ein entsprechendes Oniumsalz gemäß der vorliegenden Erfindung kann dabei, je nach Art der Oniumgruppe, 1, 2, 3 oder 4 organische Reste tragen. Die organischen Reste können dabei beispielsweise über eine C-X-Verknüpfung, wobei X für N, S oder P steht, mit einem positiv geladenen N-, S- oder P-Atom eines erfindungsgemäßen Onium-Ions verbunden sein. Es ist jedoch ebenso möglich, dass die organischen Reste über ein weiteres Heteroatom, beispielsweise ein O-Atom, mit einem positiv geladenen N-, S- oder P-Atom eines erfindungsgemäßen Onium-Ions verbunden sind.

Ein im Rahmen der vorliegenden Erfindung als Bestandteil einer erfindungsgemäßen Stabilisatorzusammensetzung geeignetes Oniumperchlorat weist beispielsweise ein positiv geladenes N-, S- oder P-Atom oder zwei oder mehr solcher positiv geladener N-, S- oder P-Atome oder Gemische aus zwei oder mehr der genannten, positiv geladenen Atomtypen auf.

Im Rahmen der vorliegenden Erfindung sind als Oniumperchlorate Verbindungen geeignet, die am N, S oder P-Atom mindestens einen organischen Rest und höchstens die maximal mögliche Zahl an organischen Resten tragen. Wenn ein erfindungsgemäß geeignetes Oniumperchlorat weniger organische Reste trägt als zur Ausbildung eines positiv geladenen Oniumions notwendig sind, so wird die positive Ladung in üblicher, dem Fachmann bekannter Weise beispielsweise durch Protonierung mittels einer geeigneten Säure erzeugt, so dass das entsprechende Oniumperchlorat in diesem Fall neben einem organischen Rest noch mindestens ein Proton trägt.

Es sind erfindungsgemäß daher also Verbindungen als Oniumperchlorate geeignet, die aufgrund von Protonierungsreaktionen eine positive Ladung aufweisen. Es ist jedoch ebenso möglich, im Rahmen der erfindungsgemäßen Stabilisatorzusammensetzungen Oniumperchlorate einzusetzen, die aufgrund einer Alkylierungs- oder Peralkylierungsreaktion eine positive Ladung aufweisen. Beispiele für derartige Verbindungen sind Tetraalkylammonium-, Trialkylsulfonium- oder Tetraalkylphosphoniumperchlorate. Es ist jedoch im Rahmen der vorliegenden Erfindung ebenso vorgesehen, dass ein erfindungsgemäß geeignetes Oniumperchlorat einen Aryl-, Alkaryl-, Cycloalkyl-, Alkenyl-, Alkinyl- oder Cycloalkenylrest aufweist. Es ist erfindungsgemäß ebenso möglich und vorgesehen, dass ein im Rahmen einer erfindungsgemäßen Stabilisatorzusammensetzung einsetzbares Oniumsalz zwei oder gegebenenfalls mehr unterschiedliche Substituententypen aufweist, beispielsweise einen Alkyl-und einen Cycloalkylrest oder einen Alkyl- und einen Arylrest.

Es ist im Rahmen der vorliegenden Erfindung ebenso möglich und vorgesehen, dass ein im Rahmen einer erfindungsgemäßen Stabilisatorzusammensetzung einsetzbares Oniumsalz Substituenten aufweist, die ihrerseits durch eine oder mehrere funktionelle Gruppen substituiert sind. Als "funktionelle Gruppen" werden dabei Gruppen bezeichnet, welche die Wirkungen der Stabilisatorzusammensetzung oder Stabilisatorzusammensetzung verbessern oder zumindest nicht oder nur unwesentlich verschlechtern. Entsprechende funktionelle Gruppen können beispielsweise NH-Gruppen, NH₂-Gruppen, OH-Gruppen, SH-Gruppen, Estergruppen, Ethergruppen, Thioethergruppen, Isocyanuratgruppen oder Ketogruppen oder Gemische aus zwei oder mehr davon sein.

Als Phosphoniumperchlorate sind im Rahmen der vorliegenden Erfindung grundsätzlich alle Verbindungen einsetzbar, die durch entsprechende Umsetzung geeigneter Reaktanden zu einem Phosphoniumperchlorat führen. Dabei können erfindungsgemäß einsetzbare Phosphoniumperchlorate beispielsweise durch entsprechende Umsetzung von Tetraalkyl-, Tetracycloalkyl- oder Tetraarylphosphorhalogeniden erhalten werden. Geeignete Phosphoniumperchlorate leiten sich daher beispielsweise von Tetraalkylphosphorsalzen wie Tetra-n-ethylphosphoniumbromid, Tetra-n-propylphosphoniumbromid, Tetra-n-butylphosphoniumbromid, Tetra-n-isobutylphosphoniumbromid, Tetra-n-pentylphosphoniumbromid, Tetra-n-hexylphosphoniumbromid und dergleichen Tetraalkylphosphorsalzen ab.

Weiterhin eignen sich grundsätzlich zum Einsatz im Rahmen der erfindungsgemäßen Stabilisatorzusammensetzungen Phosphoniumperchlorate, die sich beispielsweise von Tetracycloalkylphosphorsalzen oder Tetraarylphosphorsalzen ableiten. Geeignete Phosphoniumperchlorate basieren daher beispielsweise auf Tetracycloalkyl- oder Tetraarylphosphorsalzen wie Tetracyclohexylphosphoniumbromid oder Tetraphenyl-phosphoniumbromid und dergleichen Tetracycloalkyl- oder Tetraarylphosphorsalzen. Die oben genannten Verbindungen können im Rahmen der vorliegenden Erfindung unsubstituiert sein, sie können jedoch auch einen oder mehrere der oben genannten Substituenten aufweisen, sofern diese Substituenten im Rahmen der Stabilisatorzusammensetzung keine nachteiligen Wirkungen aufweisen und den Einsatzzweck der Stabilisatorzusammensetzung nicht nachteilig beeinflussen.

Ebenfalls im Rahmen der vorliegenden Erfindung einsetzbar sind organische Phosphoniumperchlorate, die an einem Phosphoratom unterschiedliche Typen organischer Substituenten tragen, die wiederum gegebenenfalls unterschiedlich substituiert sein können.

Im Rahmen einer weiteren Ausführungsform der vorliegenden Erfindung werden als Phosphoniumperchlorate Tetra-n-butylphosphoniumperchlorat oder Triphenylbenzylphosphoniumperchlorat eingesetzt.

Als Sulfoniumperchlorate sind im Rahmen der vorliegenden Erfindung grundsätzlich alle Verbindungen einsetzbar, die durch entsprechende Umsetzung geeigneter Reaktanden zu einem Sulfoniumperchlorat führen. Dabei können erfindungsgemäß einsetzbare Sulfoniumperchlorate beispielsweise durch entsprechende Umsetzung von Sulfiden wie Alkylmonosulfiden, Alkyldisulfiden, Dialkylsulfiden oder Polyalkylsulfiden erhalten werden. Geeignete Sulfoniumperchlorate leiten sich daher beispielsweise von Dialkylsulfiden wie Ethylbenzylsulfid, Allylbenzylsulfid oder Alkyldisulfiden wie Hexandisulfid, Heptandisulfid, Octandisulfid und dergleichen Alkyldisulfiden ab.

Weiterhin eignen sich grundsätzlich zum Einsatz im Rahmen der erfindungsgemäßen Stabilisatorzusammensetzungen Sulfoniumperchlorate, die sich beispielsweise von Tricycloalkylsulfoniumsalzen oder Triarylsulfoniumsalzen ableiten. Geeignete Sulfoniumperchlorate basieren daher beispielsweise auf Tricycloalkyl- oder Triarylsulfoniumsalzen wie Tricyclohexylsulfoniumbromid oder Triphenylsulfoniumbromid und dergleichen Tricycloalkyl- oder Triarylsulfoniumsalzen. Ebenfalls geeignet sind Tri-alkyl-, Triaryl- oder Tricycloalkylsulfoxoniumsalze wie Trimethylsulfoxoniumperchlorat. Die oben genannten Verbindungen können im Rahmen der vorliegenden Erfindung unsubstituiert sein, sie können jedoch auch einen oder mehrere der oben genannten Substituenten aufweisen, sofern diese Substituenten im Rahmen der Stabilisatorzusammensetzung oder Stabilisatorzusammensetzung keine nachteiligen Wirkungen aufweisen und den Einsatzzweck der Stabilisatorzusammensetzung einer aus einer solchen Stabilisatorzusammensetzung hergestellten Stabilisatorzusammensetzung nicht nachteilig beeinflussen.

Ebenfalls im Rahmen der vorliegenden Erfindung einsetzbar sind organische Sulfoniumperchlorate, die an einem Schwefelatom unterschiedliche Typen organischer Substituenten tragen, die wiederum gegebenenfalls unterschiedlich substituiert sein können.

Im Rahmen einer bevorzugten Ausführungsform der vorliegenden Erfindung wird als Sulfoniumperchlorat Trimethylsulfoxoniumperchlorat eingesetzt.

Als Ammoniumperchlorate sind im Rahmen der vorliegenden Erfindung grundsätzlich alle Verbindungen einsetzbar, die durch entsprechende Umsetzung geeigneter Reaktanden zu einem Ammoniumperchlorat führen. Dabei können erfindungsgemäß einsetzbare Ammoniumperchlorate beispielsweise durch entsprechende Umsetzung von Aminen wie Alkylmonoaminen, Alkylendiaminen, Alkylpolyaminen, oder sekundären oder tertiären Aminen oder Amiden erhalten werden.

Geeignete Ammoniumperchlorate leiten sich daher beispielsweise von Monoaminoverbindungen mit 2 bis etwa 40, beispielsweise 6 bis etwa 20 C-Atomen oder von Diaminoverbindungen mit 2 bis etwa 40, beispielsweise 6 bis etwa 20 C-Atomen oder von Triaminoverbindungen mit 2 bis etwa 40, beispielsweise 6 bis etwa 20 C-Atomen, ab. Weiterhin erfindungsgemäß einsetzbar sind beispielsweise substituierte Amine mit 2 bis etwa 20 C-Atomen.

Geeignete Monoamine weisen beispielsweise eine primäre, eine sekundäre oder eine tertiäre Aminogruppe, auf. Beispiele hierfür sind Mono-, Di- oder Triethylamin, Mono-, Di- oder Tri-n-Propylamin, Mono-, Di- oder Tri-i-Propylamin, Mono-, Di- oder Tri-n-Butylamin, Mono-, Di- oder Tri-sec-Butylamin, Mono-, Di- oder Tri-tert-Butylamin oder Mono-, Di- oder Trioctylamin, N-Methyl-, N-Ethyl-, N-Cyclohexylmorpholin, Dimethylcyclohexylamin, Dimethylbenzylamin, Trimethylamin, 1-Azabicyclo[3,3,0]octan. Geeignete Diamine weisen beispielsweise zwei primäre, zwei sekundäre, zwei tertiäre oder eine primäre und eine sekundäre oder eine primäre und eine tertiäre oder eine sekundäre und eine tertiäre Aminogruppe auf. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethyleyelohexan (Isophorondiamin, IPDA), 4,4'-Diaminodicyclohexylmethan, 1,4-Diaminocyclohexan, Aminoethylethanolamin, 2-(N,N-Dimethylamino)-1-aminoethan, Dimorpholinodiethylether, 1,4-Diazabicyclo[2,2,2]octan, N,N,N',N'-Tetramethylethylendiamin, N,N,N',N'-Tetramethylbutandiamin, N,N,N',N'-Tetramethylhexandiamin-1,6, Tetramethyldiaminoethylether, Di-(4-N,N-dimethylaminocyclohexyl)-methan, 1,2-Dimethylimidazol, N,N'-Dimethylpiperazin, Hydrazin, Hydrazinhydrat. Geeignete Triamine weisen beispielsweise drei primäre, drei sekundäre, drei tertiäre oder zwei primäre und eine sekundäre oder eine tertiäre, zwei sekundäre und eine primäre oder tertiäre, zwei tertiäre und eine primäre oder sekundäre auf. Beispiele hierfür sind die Diethylentriamin, 1,8-Diamino-4-aminomethyloctan, Pentamethyldiethylentriamin. Weiterhin geeignet ist beispielsweise Bis-(dimethylaminopropyl)-harnstoff.

Ebenfalls geeignet sind aliphatische Aminoalkohole mit 2 bis etwa 40, vorzugsweise 2 bis etwa 20 C-Atomen, beispielsweise Ethanolamin, Propanolamin, Butanolamin, Pentanolamin, 1-Amino-3,3-dimethyl-pentan-5-ol, 2-Aminohexan-2',2"-diethanolamin, 1-Amino-2,5-dimethylcyclohexan-4-ol, 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethyleyclohexanol, 1-Amino-1-cyclopentan-methanol, 2-Amino-2-ethyl-1,3-propandiol, 2-(Dimethylaminoethoxy)-ethanol; Diethanolamin, Dipropanolamin, Dibutanolamin, Dipentanolamin, Triethanolamin, Tripropanolamin, Tributanolamin, Tripentanolamin, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen eingesetzt werden.

Im Rahmen einer weiteren Ausführungsform der vorliegenden Erfindung werden als Ammoniumperchlorate die Perchlorate heterocyclischer Verbindungen eingesetzt, die über ein cyclisches, Aminogruppen aufweisendes Ringsystem verzügen.

Eine erfindungsgemäße Stabilisatorzusammensetzung kann beispielsweise nur eine halogenhaltige Oxysäure oder nur ein Salz einer halogenhaltigen Oxysäure enthalten. Es ist jedoch im Rahmen der vorliegenden Erfindung ebenso möglich und vorgesehen, dass eine erfindungsgemäße Stabilisatorzusammensetzung ein Gemisch aus zwei oder mehr halogenhaltigen Oxysäuren oder ein Gemisch aus zwei oder mehr Salzen halogenhaltiger Oxysäuren oder ein Gemisch aus mindestens einer halogenhaltigen Oxysäure und mindestens einem Salz einer halogenhaltigen Oxysäure enthält.

Im Rahmen einer speziellen Ausführungsform enthält eine Stabilisatorzusammensetzung gemäß vorliegender Erfindung als mindestens eine Supersäure Perchlorsäure oder als mindestens ein Salz einer Supersäure ein Salz der Perchlorsäure, beispielsweise NaClO₄ oder LiClO₄.

Gemäß einer weiteren Ausführungsform enthält eine Stabilisatorzusammensetzung entsprechend vorliegender Erfindung als mindestens eine Supersäure eine Sulfonsäure oder Alkylsulfonsäure oder als mindestens ein Salz einer Supersäure ein Salz einer Sulfonsäure oder einer Alkylsulfonsäure. Erfindungsgemäß geeignete Sulfonsäuren genügen beispielsweise der Formel XII

Hₛ (Rs - (SO₃)ₛ) (XII).

Erfindungsgemäß geeignete Salze von Sulfonsäuren genügen beispielsweise der Formel XIII

(M_{S})_{s/g} ((R_{S} - (SO₃)ₛ) (XIII).

In den Formeln XII und XIII bedeuten:
- R_{S} einen substituierten, linearen oder verzweigten, Alkylrest mit 1 bis 44 C-Atomen, einen substituierten Cycloalkylrest mit 6 bis 44 C-Atomen, einen substituierten Arylrest mit 6 bis 44 C-Atomen, einen substituierten Alkarylrest mit 7 bis 44 C-Atomen oder einen substituierten Aralkyrest mit 7 bis 44 C-Atomen, wobei ein Substituent mindestens eine elektronenanziehende oder eine ein Sulfonsäureanion stabilisierende Gruppe, beispielsweise F, NO₂ oder OH, trägt,
- s eine ganze Zahl von 1 bis etwa 10, beispielsweise 1, 2, 3, oder 4,
- H ein Proton und M_{S} ein Kation der Elemente Li, Na, K, Rb, Cs, Be, Mg, Ca, Sr, Ba, Al oder der Übergangselemente oder ein Ammoniumion NH₄⁺ oder ein organisches Kation und
- g die Ladungszahl des Metallkations.

Als erfindungsgemäß geeignete organische Kationen M_{S} sind beispielsweise organische Onium-Ionen zu nennen, wobei unter dem Begriff "organisches Onium-Ion" im Rahmen des vorliegenden Textes, und in diesem an anderer Stelle bereits beschrieben, Ammonium-, Sulfonium- oder Phosphonium-Ionen verstanden werden, die jeweils mindestens einen organischen Rest tragen.

Ein organisches Oniumsulfonat gemäß vorliegender Erfindung ist jedes erfindungsgemäße Sulfonat, welches mindestens ein organisches Onium-Ion als Kation M_{S} aufweist. Ein organisches Ammoniumsulfonat gemäß vorliegender Erfindung ist jedes erfindungsgemäße Sulfonat, welches mindestens ein organisches Ammonium-Ion als Kation M_{S} aufweist.

Geeignete organische Kationen M_{S} erfindungsgemäß geeigneter Sulfonate sind beispielsweise organische Ammonium-Ionen, die mindestens einen organischen Rest tragen. Ein entsprechendes organisches Ammonium-Ion gemäß der vorliegenden Erfindung kann dabei 1, 2, 3 oder 4 organische Reste tragen. Die organischen Reste können dabei beispielsweise über eine C-N-Verknüpfung mit dem positiv geladenen N-Atom eines erfindungsgemäßen Ammonium-Ions verbunden sein. Es ist jedoch ebenso möglich, dass die organischen Reste über ein weiteres Heteroatom, beispielsweise ein O-Atom, mit dem positiv geladenen N-Atom eines erfindungsgemäßen Ammonium-Ions verbunden sind.

Ein im Rahmen der vorliegenden Erfindung als Bestandteil einer erfindungsgemäßen Stabilisatorzusammensetzung geeignetes organisches Ammoniumsulfonat weist beispielsweise ein positiv geladenes N-Atom oder zwei oder mehr solcher positiv geladener N-Atome oder Gemische aus zwei oder mehr positiv geladene N-Atome auf.

Im Rahmen der vorliegenden Erfindung sind als organische Kationen M_{S} Ionen geeignet, die an einem N-Atom mindestens einen organischen Rest und höchstens die maximal mögliche Zahl an organischen Resten tragen. Wenn ein erfindungsgemäß geeignetes organisches Kation M_{S} an einem N-Atom weniger organische Reste trägt als zur Ausbildung eines positiv geladenen organischen Kations M_{S} notwendig sind, so wird die positive Ladung in üblicher, dem Fachmann bekannter Weise beispielsweise durch Protonierung mittels einer geeigneten Säure erzeugt, so dass das entsprechende organische Kation M_{S} in diesem Fall neben einem organischen Rest noch mindestens ein Proton trägt.

Es sind erfindungsgemäß daher also organische Kationen M_{S} geeignet, die aufgrund von Protonierungsreaktionen eine positive Ladung aufweisen. Es ist jedoch ebenso möglich, im Rahmen der erfindungsgemäßen Stabilisatorzusammensetzungen organische Kationen M_{S} einzusetzen, die aufgrund einer Alkylierungs- oder Peralkylierungsreaktion eine positive Ladung aufweisen. Es ist jedoch im Rahmen der vorliegenden Erfindung ebenso vorgesehen, dass ein erfindungsgemäß geeignetes organisches Kation M_{S} einen Aryl-, Alkaryl-, Cycloalkyl-, Alkenyl-, Alkinyl- oder Cycloalkenylrest aufweist. Es ist erfindungsgemäß ebenso möglich und vorgesehen, dass ein im Rahmen einer erfindungsgemäßen Stabilisatorzusammensetzung einsetzbares organisches Kation M_{S} zwei oder gegebenenfalls mehr unterschiedliche Substituententypen aufweist, beispielsweise einen Alkyl- und einen Cycloalkylrest oder einen Alkyl-und einen Arylrest.

Es ist im Rahmen der vorliegenden Erfindung ebenso möglich und vorgesehen, dass ein im Rahmen einer erfindungsgemäßen Stabilisatorzusammensetzung einsetzbares organisches Kation M_{S} Substituenten aufweist, die ihrerseits durch eine oder mehrere funktionelle Gruppen substituiert sind. Als "funktionelle Gruppen" werden dabei Gruppen bezeichnet, welche die Wirkungen der Stabilisatorzusammensetzung oder Stabilisatorzusammensetzung verbessern oder zumindest nicht oder nur unwesentlich verschlechtern. Entsprechende funktionelle Gruppen können beispielsweise NH-Gruppen, NH₂-Gruppen, OH-Gruppen, SH-Gruppen, Estergruppen, Ethergruppen, Thioethergruppen, Isocyanuratgruppen oder Ketogruppen oder Gemische aus zwei oder mehr davon sein.

Als organische Ammoniumsulfonate sind im Rahmen der vorliegenden Erfindung grundsätzlich alle Verbindungen einsetzbar, die durch entsprechende Umsetzung geeigneter Reaktanden zu einem organischen Ammoniumsulfonat führen. Dabei können erfindungsgemäß einsetzbare organische Ammoniumsulfonate beispielsweise durch entsprechende Umsetzung von Aminen wie Alkylmonoaminen, Alkylendiaminen, Alkylpolyaminen, oder sekundären oder tertiären Aminen oder Amiden erhalten werden.

Geeignete organische Ammoniumsulfonate leiten sich daher beispielsweise von Monoaminoverbindungen mit 2 bis etwa 40, beispielsweise 6 bis etwa 20 C-Atomen oder von Diaminoverbindungen mit 2 bis etwa 40, beispielsweise 6 bis etwa 20 C-Atomen oder von Triaminoverbindungen mit 2 bis etwa 40, beispielsweise 6 bis etwa 20 C-Atomen, ab. Weiterhin erfindungsgemäß einsetzbar sind beispielsweise substituierte Amine mit 2 bis etwa 20 C-Atomen.

Geeignete Monoamine, Diamine, Triamine sowie aliphatische Aminoalkohole und aromatisch-cycloaliphatische Aminoalkohole entsprechen den auf den Seiten 36 und 37 angegebenen Verbindungen.

Im Rahmen einer weiteren Ausführungsform der vorliegenden Erfindung werden als Ammoniumsulfonate die Sulfonate heterocyclischer Verbindungen eingesetzt, die über ein cyclisches, Aminogruppen aufweisendes Ringsystem verfügen.

Im Rahmen einer weiteren Ausführungsform zeichnet sich eine Stabilisatorzusammensetzung gemäß vorliegender Erfindung dadurch aus, dass mindestens eine Supersäure eine Alkylsulfonsäure oder mindestens ein Salz einer Supersäure ein Salz einer Alkylsulfonsäure, beispielsweise HSO₃CF₃, HSO₃C₂F₅, HSO₃C₃F₇, HSO₃C₄F₉, HSO₃C₅F₁₁, HSO₃C₆F₁₃, HSO₃C₇F₁₅, HSO₃C₈F₁₇, HSO₃C₉F₁₉, HSO₃C₁₀F₂₁, HSO₃C₁F₂₃, HSO₃C₁₂F₂₅, LiSO₃CF₃, LiSO₃C₂F₅, LiSO₃C₃F₇, LiSO₃C₄F₉, LiSO₃C₅F₁₁, LiSO₃C₆F₁₃, LiSO₃C₇F₁₅, LiSO₃C₈F₁₇, LiSO₃C₉F₁₉, LiSO₃C₁₀F₂₁, LiSO₃C₁₁F₂₃, LiSO₃C₁₂F₂₅, NaSO₃CF₃, NaSO₃C₂F₅, NaSO₃C₃F₇, NaSO₃C₄F₉, NaSO₃C₅F_{11,} NaSO₃C₆F_{13,} NaSO₃C₇F₁₅, NaSO₃C₈F₁₇, NaSO₃C₉F₁₉, NaSO₃C₁₀F₂₁, NaSO₃C₁₁F₂₃, NaSO₃C₁₂F₂₅, Ca(SO₃CF₃)₂, Ca(SO₃C₂F₅)₂, Ca(SO₃C₃F₇)₂, Ca(SO₃C₄F₉)₂, Ca(SO₃C₅F₁₁)₂, Ca(SO₃C₆F₁₃)₂, Ca(SO₃C₇F₁₅)₂, Ca(SO₃C₈F)₂, Ca(SO₃C₉F₁₉)₂, Ca(SO₃C₁₀F₂₁)₂, Ca(SO₃C₁₁F₂₃)₂, Ca(SO₃C₁₂F₂₅)₂, (HSO₃)₂CF₂, (HSO₃)₂C₂F₄, (HSO₃)₂C₃F₆, (HSO₃)₂C₄F₈, (HSO₃)₂C₅F₁₀, (HSO₃)₂C₆F₁₂, (HSO₃)₂C₇F₁₄, (HSO₃)₂C₈F₁₆, (HSO₃)₂C₉F₁₈, (HSO₃)₂C₁₀F₂₀, (HSO₃)₂C₁₁F₂₂, (HSO₃)₂C₁₂F₂₄, (LiSO₃)₂CF₂, (LiSO₃)₂C₂F₄, (LiSO₃)₂C₃F₆, (LiSO₃)₂C₄F₈, (LiSO₃)₂C₅F₁₀, (LiSO₃)₂C₆F₁₂, (LiSO₃)₂C₇F₁₄, (LiSO₃)₂C₈F₁₆, (LiSO₃)₂C₉F₁₈, (LiSO₃)₂C₁₀F₂₀, (LiSO₃)₂C₁₁F₂₂, (LiSO₃)₂C₁₂F₂₄, (NaSO₃)₂CF₂, (NaSO₃)₂C₂F₄, (NaSO₃)₂C₃F₆, (NaSO₃)₂C₄F₈, (NaSO₃)₂C₅F₁₀, (NaSO₃)₂C₆F₁₂, (NaSO₃)₂C₇F₁₄, (NaSO₃)₂C₈F₁₆, (NaSO₃)₂C₉F₁₈, (NaSO₃)₂C₁₀F₂₀, (NaSO₃)₂C₁₁F₂₂, (NaSO₃)₂C₁₂F₂₄, Ca(SO₃)₂CF₂, Ca(SO₃)₂C₂F₄, Ca(SO₃)₂C₃F₆, Ca(SO₃)₂C₄F₈, Ca(SO₃)₂C₅F₁₀, Ca(SO₃)₂C₆F₁₂, Ca(SO₃)₂C₇F₁₄, Ca(SO₃)₂C8F₁₆, Ca(SO₃)₂C₉F₁₈, Ca(SO₃)₂C₁₀F₂₀, Ca(SO₃)₂C₁₁F₂₂, Ca(SO₃)₂C₁₂F₂₄ ist. Beispielsweise werden LiSO₃C₈F₁₇ oder NaSO₃C₈F₁₇ oder Ca(SO₃C₈F₁₇)₂ eingesetzt. Entsprechend einer weiteren speziellen Ausführungsform enthält eine Stabilisatorzusammensetzung gemäß vorliegender Erfindung als mindestens eine Supersäure Trifluoromethylsulfonsäure oder als mindestens ein Salz einer Supersäure ein Salz der Trifluoromethylsulfonsäure, beispielsweise Li-Trifluoromethylsulfonat.

Es ist darüber hinaus ebenso vorgesehen, Derivate der erfindungsgemäßen Sulfonsäuren und Derivate der erfindungsgemäßen Anionen von Sulfonsäuren einzusetzen, in denen gegebenenfalls die Fluoratome ganz oder teilweise durch andere dem Fachmann bekannte, elektronenanziehende Gruppen, beispielsweise NO₂ oder OH, ersetzt sind.

Eine Stabilisatorzusammensetzung entsprechend vorliegender Erfindung kann, insbesondere wenn ein oder mehrere Salze erfindungsgemäß geeigneter Supersäuren eingesetzt werden, dementsprechend beispielsweise Anionen der Formel (CB₁₁H₁₂)⁻ oder teilweise oder vollständig substituierte Anionen der Formel CB₁₁A¹ᵤA²ᵥA³_{w}H_{(12-u-v-w)}⁻, wobei A¹ für ein Halogenatom, A² für eine Alkylgruppe, A³ für eine teilweise oder vollständig halogenierte Alkylgruppe stehen und u, v, w jeweils eine ganze Zahl von 0 bis 12 unter der Maßgabe u + v + w ≤ 12 bedeuten, enthalten. Erfindungsgemäß geeignete Salze solcher Supersäuren enthalten beispielsweise Kationen, die sich von den Elementen Li, Na, K, Rb, Cs, Be, Mg, Ca, Sr, Ba, Al, Ga, In, Tl, Ge, Sn, Pb, Sb, den Übergangselementen, den Lanthaniden und den Actiniden ableiten, sowie Ammonium-Ionen NH₄⁺ oder organische Onium-Ionen, wie sie im Rahmen der vorliegenden Erfindung an anderer Stelle beschrieben sind.

Eine Stabilisatorzusammensetzung entsprechend vorliegender Erfindung kann, insbesondere wenn ein oder mehrere Salze erfindungsgemäß geeigneter Supersäuren eingesetzt werden, dementsprechend beispielsweise Anionen der Formel (F₂ₑ₊₁CₑSO₂)₂N⁻ oder Anionen der Formel (F₂ₑ₊₁CₑCO)₂N⁻, wobei e in beiden Formeln eine ganze Zahl von 1 bis 44 bedeutet, beispielsweise das Bis(trifluoromethylsulfonyl)imid-Anion (CF₃SO₂)₂N⁻, oder fluorierte Tetraphenylborat-Anionen wie beispielsweise Tetrakis(3,5-bis(trifluoromethyl)phenylborat oder Perfluorotetraphenylborat, oder Polyfluoroalkoxyaluminat-Anionen, oder Pikrat-Anionen 2,4,6-(NO)₂C₆H₂O⁻, oder Bis(oxalato)borat-Anionen enthalten. Erfindungsgemäß geeignete Salze solcher Supersäuren enthalten beispielsweise Kationen, die sich von den Elementen Li, Na, K, Rb, Cs, Be, Mg, Ca, Sr, Ba, Al, Ga, In, Tl, Ge, Sn, Pb, Sb, den Übergangselementen, den Lanthaniden und den Actiniden ableiten, sowie Ammonium-Ionen NH₄⁺ oder organische Onium-Ionen, wie sie im Rahmen des vorliegenden Textes an anderen Stellen beschrieben sind.

Im Rahmen spezieller Ausführungsformen der vorliegenden Erfindung werden Lithiumsalze erfindungsgemäßer Supersäuren, beispielsweise Salze von Imiden der Formel (F₂ₑ₊₁CSO₂)₂NLi, Li-Carborane oder Salze der Formel Li(CB₁₁A¹ᵤA²ᵥA³_{w}H(_{12-u-v-w)}) eingesetzt. Entsprechend weiterer Ausführungsformen werden (CF₃SO₂)₂NLi, Li-Pikrat, Li-Trifluoroacetat, LiN(COCF₃)₂, Li-Bis(trifluoromethylsulfoyl)imid und Li-Bis(oxalato)borat verwendet.

Im Rahmen weiterer spezieller, Ausführungsformen der vorliegenden Erfindung werden Salze erfindungsgemäßer Supersäuren, beispielsweise Salze von Imiden der Formeln (F₂ₑ₊₁CₑSO₂)₂NNa, ((F₂ₑ₊₁CeSO₂)₂N)₂Ca sowie der entsprechenden Onium-Salze, Na-Carborane, Ca-Carborane, Onium-Carborane oder Salze der Formeln Na(CB₁₁A¹ᵤA²ᵥA³_{w}H₍₁₂₋ᵤ₋ᵥ-_{w)}), Ca((CB₁₁A¹ᵤA²ᵥA³_{w}H_{(12-u-v-w)}))₂ sowie der entsprechenden Onium-Salze eingesetzt. Entsprechend weiterer Ausführungsformen werden (CF₃SO₂)₂NNa, ((CF₃SO₂)₂N)₂Ca sowie die entsprechenden Onium-Salze, Na-Pikrat, Ca-Pikrat, Onium-Pikrate, Na-Trifluoroacetat, Ca-Trifluoroacetat, Onium-Trifluoroacetate, NaN(COCF₃)₂, Ca(N(COCF₃)₂)₂ sowie die entsprechenden Onium-Salze, Na-Bis(trifluoromethylsulfoyl)imid, Ca-Di-bis(trifluoromethylsulfoyl)imid sowie die Onium-Bis(trifluoromethylsulfoyl)imide, Na-Bis(oxalato)borat, Ca-Di-bis(oxalato)borat sowie die Onium-Bis(oxalato)borate verwendet.

Es ist darüber hinaus ebenso vorgesehen, Derivate der vorstehend genannten erfindungsgemäßen Supersäuren und Derivate der vorstehend genannten erfindungsgemäßen Anionen von Supersäuren einzusetzen, in denen gegebenenfalls die Fluoratome ganz oder teilweise durch andere dem Fachmann bekannte, elektronenanziehende Gruppen, beispielsweise NO₂ oder OH, ersetzt sind.

Erfindungsgemäß geeignete Supersäuren und die entsprechenden Salze können nach dem Fachmann bekannten Methoden hergestellt werden. Beispielsweise beschreiben die WO 02/079210 und Moss et al. in Organic Letters, 2001, 3, 2375-2377 Verfahren zur Herstellung von Carboran-Anionen sowie von teilweise oder vollständig substituierten Carboran-Anionen. Li-Bis(oxalato)borat kann beispielsweise nach der von Xu et al. in Electrochemical and Solid-State Letters, 2001, 4, E1-E4 beschriebenen Methode oder nach dem in der DE-C-198 29 030 offenbarten Verfahren erhalten werden. Darüber hinaus beschreibt beispielsweise die US 6,107,493 ein Verfahren zur Herstellung von zyklischen Perfluoroalkanbis(sulfonyl)imiden.

Eine erfindungsgemäße Stabilisatorzusammensetzung kann beispielsweise nur eine Supersäure oder nur ein Salz einer Supersäure enthalten. Es ist jedoch im Rahmen der vorliegenden Erfindung ebenso möglich und vorgesehen, dass eine erfindungsgemäße Stabilisatorzusammensetzung ein Gemisch aus zwei oder mehr Supersäuren oder ein Gemisch aus zwei oder mehr Salzen von Supersäuren oder ein Gemisch aus mindestens einer Supersäure und mindestens einem Salz einer Supersäure enthält.

Der Anteil einer Supersäure oder eines Salzes einer Supersäure oder eines Gemischs aus zwei oder mehr solcher Säuren und/oder Salze an der erfindungsgemäßen Stabilisatorzusammensetzung beträgt etwa 0,001 bis etwa 50 Gew.-%, beispielsweise etwa 0,002 bis etwa 20 Gew.-% oder etwa 0,01 bis etwa 15 Gew.-% oder etwa 0,05 bis etwa 10 Gew.-%, jeweils bezogen auf die gesamte Stabilisatorzusammensetzung.

Als Zusatzstoffe eignen sich weiterhin beispielsweise Epoxyverbindungen. Beispiele für derartige Epoxyverbindungen sind epoxidiertes Sojaöl, epoxidiertes Olivenöl, epoxidiertes Leinöl, epoxidiertes Rizinusöl, epoxidiertes Erdnußöl, epoxidiertes Maisöl, epoxidiertes Baumwollsamenöl sowie Glycidylverbindungen.

Glycidylverbindungen enthalten eine Glycidylgruppe, die direkt an ein Kohlenstoff-, Sauerstoff-, Stickstoff- oder Schwefelatom gebunden ist. Glycidyl-oder Methylglycidylester sind durch Umsetzung einer Verbindung mit mindestens einer Carboxylgruppe im Molekül und Epichlorhydrin bzw. Glycerindichlorhydrin bzw. Methyl-epichlorhydrin erhältlich. Die Umsetzung erfolgt zweckmäßigerweise in Gegenwart von Basen.

Weitere Einzelheiten im Hinblick auf erfindungsgemäß geeignete Glycidylverbindungen enthält die WO 02/068526 A1 auf Seite 20, Zeile 22 bis Seite 21, Zeile 19. Auf die genannte Druckschrift und insbesondere die hier zitierte Passage wird ausdrücklich Bezug genommen und als Bestandteil der Offenbarung des vorliegenden Textes betrachtet.

Weitere im Rahmen der vorliegenden Erfindung als Zusatzstoffe geeignete, endständige Epoxide sind beispielsweise Glycidyl-1-naphthylether, Glycidyl-2-phenylphenylether, 2-Diphenylglycidylether, N-(2,3-Epoxypropyl)phthalimid oder 2,3-Epoxypropyl-4-methoxyphenylether.

Ebenfalls geeignet sind N-Glycidylverbindungen, wie sie durch Dehydrochlorierung der Reaktionsprodukte von Epichlorhydrin mit Aminen, die mindestens ein Aminowasserstoffatom enthalten, erhältlich sind. Solche Amine sind beispielsweise Anilin, N-Methylanilin, Toluidin, n-Butylamin, Bis(4-aminophenyl)methan, m-Xylylendiamin oder Bis(4-methylaminophenyl)methan.

Ebenfalls geeignet sind S-Glycidylverbindungen, beispielsweise Di-S-glycidyletherderivate, die sich von Dithiolen wie Ethan-1,2-dithiol oder Bis(4-mercaptomethylphenyl)ether ableiten.

Besonders geeignete Epoxyverbindungen sind beispielsweise in der EP-A 1 046 668 auf den Seiten 3 bis 5 beschrieben, wobei auf die dort enthaltene Offenbarung ausdrücklich Bezug genommen wird und diese als Bestandteil der Offenbarung des vorliegenden Textes betrachtet wird.

Weiterhin als Zusatzstoffe im Rahmen der vorliegenden Erfindung geeignet sind 1,3-Dicarbonylverbindungen, insbesondere die β-Diketone und β-Ketoester. Im Rahmen der vorliegenden Erfindung geeignet sind Dicarbonylverbindungen der allgemeinen Formel R^{'}C(O)CHR^{"}-C(O)R^{"'}, wie sie beispielsweise auf S. 5 der EP- 1 046 668 beschrieben sind, auf die insbesondere im Hinblick auf die Reste R', R" und R"' ausdrücklich Bezug genommen wird und deren Offenbarung als Bestandteil der Offenbarung des vorliegenden Textes betrachtet wird. Besonders geeignet sind hierbei beispielsweise Acetylaceton, Butanoylaceton, Heptanoylaceton, Stearoylaceton, Palmitoylaceton, Lauroylaceton, 7-tert-Nonylthioheptandion-2,4, Benzoylaceton, Dibenzoylmethan, Lauroylbenzoylmethan, Palmitoylbenzoylmethan, Stearoylbenzoytmethah, Isooctylbenzoylmethan, 5-Hydroxycapronylbenzoylmethan, Tribenzoylmethan, Bis(4-methylbenzoyl)methan, Benzoyl-p-chlorbenzoylmethan, Bis(2-hydroxybenzoyl)methan, 4-Methoxybenzoylbenzoylmethan, Bis(4-methoxybenzoyl)methan, Benzoylformylmethan, Benzoylacetylphenylmethan, 1-Benzoyl-1-acetylnonan, Stearoyl-4-methoxybenzoylmethan, Bis(4-tert-butylbenzoyl)methan, Benzoylphenylacetylmethan, Bis(cyclohexanoyl)methan, Dipivaloylmethan, 2-Acetylcyclopentanon, 2-Benzoylcyclopentanon, Diacetessigsäuremethyl-, -ethyl-, -butyl-, 2-ethylhexyl-, -dodecyl- oder - octadecylester sowie Propionyl- oder Butyrylessigsäureester mit 1 bis 18 C-Atomen sowie Stearoylessigsäureethyl-, -propyl-, -butyl-, -hexyl- oder -octylester oder mehrkernige β-Ketoester wie sie in der EP-A 433 230 beschrieben sind, auf die ausdrücklich Bezug genommen wird, oder Dehydracetsäure sowie deren Zink-, Magnesium- oder Alkalisalze oder die Alkali-, Erdalkali-, oder Zinkchelate der genannten Verbindungen, sofern diese existieren.

1,3-Diketoverbindungen können in einer erfindungsgemäßen Stabilisatorzusammensetzung in einer Menge von bis zu etwa 20 Gew.-%, beispielsweise bis zu etwa 10 Gew.-%, enthalten sein.

Weiterhin als Zusatzstoffe im Rahmen der erfindungsgemäßen Stabilisatorzusammensetzung geeignet sind Polyole. Geeignete Polyole sind beispielsweise Pentaerythrit, Dipentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Tris-(hydroxyethyl)isocyanurat, Palatinit, Tetramethylolcyclohexanol, Tetramethylolcyclopentanol, Tetramethylolcycloheptanol, Glycerin, Diglycerin, Polyglycerin, Thiodiglycerin oder 1-0-α-D-Glycopyranosyl-D-mannit-dihydrat.

Die als Zusatzstoffe geeigneten Polyole können in einer erfindungsgemäßen Stabilisatorzusammensetzung in einer Menge von bis zu etwa 30 Gew.-%, beispielsweise bis zu etwa 10 Gew.-% enthalten sein.

Ebenfalls als Zusatzstoffe geeignet sind beispielsweise sterisch gehinderte Amine wie sie in der EP-A 1 046 668 auf den Seiten 7 bis 27 genannt werden. Auf die dort offenbarten sterisch gehinderten Amine wird ausdrücklich Bezug genommen, die dort genannten Verbindungen werden als Bestandteil der Offenbarung des vorliegenden Textes betrachtet.

Die als Zusatzstoffe geeigneten sterisch gehinderten Amine können in einer erfindungsgemäßen Stabilisatorzusammensetzung in einer Menge von bis zu etwa 30 Gew.-%, beispielsweise bis zu etwa 10 Gew.-% enthalten sein.

Weiterhin als Zusatzstoffe in den erfindungsgemäßen Stabilisatorzusammensetzungen geeignet sind Hydrotalcite, Zeolithe und Alkalialumocarbonate. Geeignete Hydrotalcite, Zeolithe und Alkalialumocarbonate sind beispielsweise in der EP-A 1 046 668 auf den Seiten 27 bis 29, der EP-A 256 872 auf den Seiten 3, 5 und 7, der DE-C 41 06 411 auf Seite 2 und 3 oder der DE-C 41 06 404 auf Seite 2 und 3 beschrieben. Auf diese Druckschriften wird ausdrücklich Bezug genommen und deren Offenbarung an den angegebenen Stellen wird als Bestandteil der Offenbarung des vorliegenden Textes betrachtet.

Die als Zusatzstoffe geeigneten Hydrotalcite, Zeolithe und Alkalialumocarbonate können in einer erfindungsgemäßen Stabilisatorzusammensetzung in einer Menge von bis zu etwa 50 Gew.-%, beispielsweise bis zu etwa 30 Gew.-% enthalten sein.

Ebenfalls im Rahmen der erfindungsgemäßen Stabilisatorzusammensetzungen als Zusatzstoffe geeignet sind beispielsweise Hydrocalumite der allgemeinen Formel XIV

M²⁺₍₂₊ₓ₎Al³⁺_{(1+y})(OH)_{(6+z)}A^{k-}ₐ[Bₙ]^{nl}_{b} * m H₂O (XIV),

worin M für Calcium, Magnesium oder Zink oder Gemische aus zwei oder mehr davon, A für ein k-wertiges anorganisches oder organisches Säureanion, k für 1, 2 oder 3, B für ein von A verschiedenes anorganisches oder organisches Säureanion steht, n für eine ganze Zahl ≥ 1 steht und, sofern n > 1 ist, den Polymerisationsgrad des Säureanions angibt und 1 für 1, 2, 3 oder 4 steht und die Wertigkeit des Säureanions angibt, wobei für n = 1 1 für 2, 3 oder 4 steht und für n > 1 1 die Wertigkeit der einzelnen Monomereinheiten des Polyanions angibt und für 1, 2, 3 oder 4 steht und nl die Gesamtwertigkeit des Polyanions angibt und die folgenden Regeln für die Parameter x, y, a, b, n, z, und k gelten:
0 ≤ x < 0,6,
0 ≤ y < 0,4, wobei entweder x = 0 oder y = 0,
0<a<0,8/nund
z = 1 + 2x + 3y - ka - n/b.

Im Rahmen einer bevorzugten Ausführungsform der vorliegenden Erfindung werden als Zusatzstoffe Verbindungen der allgemeinen Formel XIV eingesetzt, worin M für Calcium steht, das gegebenenfalls im Gemisch mit Magnesium oder Zink oder Magnesium und Zink vorliegen kann.

Im Hinblick auf erfindungsgemäß einsetzbare Hydrocalumite enthält die WO 02/068526. A1 auf Seite 24, Zeile 21 bis Seite 26, Zeile 12 weitere Beispiele sowie Hinweise zu deren Herstellung. Auf die genannte Druckschrift und insbesondere die hier zitierte Passage wird ausdrücklich Bezug genommen und als Bestandteil der Offenbarung des vorliegenden Textes betrachtet.

Verbindungen der allgemeinen Formel XIV können im Rahmen der erfindungsgemäßen Stabilisatorzusammensetzungen in einer Menge von bis zu etwa 50 Gew.-%, beispielsweise bis zu etwa 30 oder bis zu etwa 15 Gew.-% eingesetzt werden.

Im Rahmen einer weiteren Ausführungsform der vorliegenden Erfindung enthält eine erfindungsgemäße Stabilisatorzusammensetzung mindestens ein basisches Calciumsalz. Als basische Calciumsalze geeignet sind beispielsweise Calciumoxid, Calciumcarbonat oder Calciumhydroxid. Die basischen Calciumsalze können gegebenenfalls oberflächenmodifiziert sein.

Ebenfalls als Zusatzstoffe zu den erfindungsgemäßen Stabilisatorzusammensetzung geeignet sind Metalloxide, Metallhydroxide und Metallseifen von gesättigten, ungesättigten, geradkettigen oder verzweigten, aromatischen, cycloaliphatischen oder aliphatischen Carbonsäuren oder Hydroxycarbonsäuren mit vorzugsweise etwa 2 bis etwa 22 C-Atomen.

Als Metallkationen weisen die als Zusatzstoffe geeigneten Metalloxide, Metallhydroxide oder Metallseifen vorzugsweise ein zweiwertiges Kation auf, besonders geeignet sind die Kationen von Calcium oder Zink oder Blei oder Gemische aus zwei oder mehr davon, im Rahmen einer bevorzugten Ausführungsform der vorliegenden Erfindung sind die erfindungsgemäßen Stabilisatorzusammensetzungen jedoch frei von Zink.

Beispiele für geeignete Carbonsäureanionen umfassen Anionen von monovalenten Carbonsäuren wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Laurylsäure, Isostearinsäure, Stearinsäure, 12-Hydroxystearinsäure, 9,10-Dihydroxystearinsäure, Ölsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, Sorbinsäure, Anionen von divalenten Carbonsäuren bzw. deren Monoestern wie Oxalsäure, Malonsäure, Maleinsäure, Weinsäure, Zimtsäure, Mandelsäure, Äpfelsäure, Glykolsäure, Oxalsäure, Salicylsäure, Polyglykoldicarbonsäuren mit einem Polymerisationsgrad von etwa 10 bis etwa 12, Phthalsäure, Isophthalsäure, Terephthalsäure oder Hydroxyphthalsäure, Anionen von tri- oder tetravalenten Carbonsäuren bzw. deren Mono-, Di- oder Triestern wie sie in Hemimellithsäure, Trimellithsäure, Pyromellithsäure oder Zitronensäure sowie ferner sogenannte überbasische Carboxylate wie sie beispielsweise in der DE-A 41 06 404 oder der DE-A 40 02 988 beschrieben werden, wobei die Offenbarung der letztgenannten Dokumente als Bestandteil der Offenbarung des vorliegenden Textes betrachtet wird.

Im Rahmen einer bevorzugten Ausführungsform der vorliegenden Erfindung werden als Zusatzstoffe Metallseifen eingesetzt, deren Anionen sich von gesättigten oder ungesättigten Carbonsäuren oder Hydroxycarbonsäuren mit etwa 8 bis etwa 20 C-Atomen ableiten. Besonders bevorzugt sind hierbei Stearate, Oleate, Laurate, Palmitate, Behenate, Versatate, Hydroxystearate, Dihydroxystearate, p-tert-Butylbenzoate oder (Iso)Octanoate von Calcium oder Zink oder Gemische aus zwei oder mehr davon. Im Rahmen einer weiteren bevorzugten Ausführungsform der vorliegenden Erfindung weist eine erfindungsgemäße Stabilisatorzusammensetzung Calciumstearat oder Zinkstearat oder deren Gemisch auf.

Eine erfindungsgemäße Stabilisatorzusammensetzung kann die genannten Metalloxide, Metallhydroxide oder Metallseifen oder ein Gemisch aus zwei oder mehr davon, in einer Menge von bis zu etwa 50 Gew.-%, beispielsweise in einer Menge von bis etwa 30 Gew.-%, enthalten.

Eine erfindungsgemäße Stabilisatorzusammensetzung kann darüber hinaus weiterhin als Thermostabilisatorkomponente eine Organozinnverbindung oder ein Gemisch aus zwei oder mehr Organozinnverbindungen enthalten. Geeignete Organozinnverbindungen sind beispielsweise Methylzinn-tris-(isooctylthioglycolat), Methylzinn-tris-(isooctyl-3-mercaptopropionat), Methylzinn-tris-(isodecyl-thioglycolat), Dimethylzinn-bis-(isooctyl-thioglycolat), Dibutylzinn-bis-(isooctyl-thioglycolat), Monobutylzinn-tris-(isooctyl-thioglycolat), Dioctylzinnbis-(isooctyl-thioglycolat), Monooctylzinn-tris-(isooctyl-thioglycolat) oder Dimethylzinn-bis-(2-ethylhexyl-β-mercaptopropionat).

Darüber hinaus sind im Rahmen der erfindungsgemäßen Stabilisatorzusammensetzungen die in der EP-A 0 742 259 auf den Seiten bis 18 bis 29 genannten und in ihrer Herstellung beschriebenen Organozinnverbindungen einsetzbar. Auf die oben genannte Offenbarung wird ausdrücklich Bezug genommen, wobei die dort genannten Verbindungen und deren Herstellung als Bestandteil der Offenbarung des vorliegenden Textes verstanden werden.

Eine erfindungsgemäße Stabilisatorzusammensetzung kann die beschriebenen Organozinnverbindungen in einer Menge von bis zu etwa 20 Gew.-%, insbesondere bis etwa 10 Gew.-%, enthalten.

Im Rahmen einer weiteren Ausführungsform der vorliegenden Erfindung kann eine erfindungsgemäße Stabilisatorzusammensetzung organische Phosphitester mit 1 bis 3 identischen, paarweise identischen oder unterschiedlichen organischen Resten enthalten. Geeignete organische Reste sind beispielsweise lineare oder verzweigte, gesättigte oder ungesättigte Alkylreste mit 1 bis 24 C-Atomen, gegebenenfalls substituierten Alkylreste mit 6 bis 20 C-Atomen oder gegebenenfalls substituierte Aralkylreste mit 7 bis 20 C-Atomen. Beispiele für geeignete organische Phosphitester sind Tris-(nonylphenyl)-, Trilauryl-, Tributyl-, Trioctyl-, Tridecyl-, Tridodecyl-, Triphenyl-, Octyldiphenyl-, Dioctylphenyl-, Tri-(Octylphenyl)-, Tribenzyl-, Butyldikresyl-, Octyl-di(octylphenyl)-, Tris-(2-ethylhexyl)-, Tritolyl-, Tris-(2-cyclohexylphenyl)-, Tri-α-naphthyl-, Tris-(phenylphenyl)-, Tris-(2-phenylethyl)-, Tris-(dimethylphenyl)-, Trikresyl- oder Tris-(p-nonylphenyl)-phosphit oder Tristearyl-sorbit-triphosphit oder Gemische aus zwei oder mehr davon.

Eine erfindungsgemäße Stabilisatorzusammensetzung kann die beschriebenen Phosphitverbindungen in einer Menge von bis zu etwa 30 Gew.-%, insbesondere bis etwa 10 Gew.-%, jeweils bezogen auf die gesamte Stabilisatorzusammensetzung, enthalten.

Eine erfindungsgemäße Stabilisatorzusammensetzung kann weiterhin als Zusatzstoffe blockierte Mercaptane enthalten, wie sie in der EP-A 0 742 259 auf den Seiten 4 bis 18 genannt werden. Auf die Offenbarung in der angegebenen Schrift wird ausdrücklich Bezug genommen, sie wird als Bestandteil der Offenbarung des vorliegenden Textes verstanden.

Eine erfindungsgemäße Stabilisatorzusammensetzung kann die beschriebenen blockierten Mercaptane in einer Menge von bis zu etwa 30 Gew.-%, insbesondere bis zu etwa 10 Gew.-%, jeweils bezogen auf die gesamte Stabilisatorzusammensetzung, enthalten.

Eine erfindungsgemäße Stabilisatorzusammensetzung kann weiterhin Gleitmittel wie Paraffinwachse, Polyethylenwachse, Polypropylenwachse, Montanwachse, Estergleitmittel wie Fettsäureester, gereinigte oder hydrierte natürliche oder synthetische Triglyceride oder Partialester, Amidwachse, Chlorparaffine, Glycerinester oder Erdalkaliseifen enthalten. Verwendbare Gleitmittel werden darüber hinaus auch in "Kunststoffadditive", R. Gächter/H. Müller, Carl Hanser Verlag, 3. Auflage, 1989, S. 478 - 488 beschrieben. Weiterhin als Gleitmittel geeignet sind beispielsweise Fettketone wie sie in der DE 4,204,887 beschrieben werden sowie Gleitmittel auf Silikonbasis, wie sie beispielsweise die EP-A 0 259 783 nennt, oder Kombinationen davon, wie sie in der EP-A 0 259 783 genannt werden. Auf die genannten Dokumente wird hiermit ausdrücklich Bezug genommen, deren Gleitmittel betreffende Offenbarung wird als Bestandteil der Offenbarung des vorliegenden Textes betrachtet. Besonders geeignet sind im Rahmen der vorliegenden Erfindung Gleitmittel der Produktreihe Baerolub® der Firma Baerlocher GmbH (Unterschleißheim, Deutschland).

Eine erfindungsgemäße Stabilisatorzusammensetzung kann die beschriebenen Gleitmittel in einer Menge von bis zu etwa 70 Gew.-%, insbesondere bis etwa 55 Gew.-%, jeweils bezogen auf die gesamte Stabilisatorzusammensetzung, enthalten.

Ebenfalls als Zusatzstoffe für Stabilisatorzusammensetzungen gemäß der vorliegenden Erfindung geeignet sind organische Weichmacher.

Als Weichmacher geeignet sind beispielsweise Verbindungen aus der Gruppe der Phthalsäureester wie Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Dicyclohexyl-, Dimethylcyclohexyl-, Dimethylglykol-, Dibutylglykol-, Benzylbutyl- oder Diphenylphthalat sowie Gemische von Phthalaten, beispielsweise Gemische von Alkylphthalaten mit 7 bis 9 oder 9 bis 11 C-Atomen im Esteralkohol oder Gemische von Alkylphthalaten mit 6 bis 10 und 8 bis 10 C-Atomen im Esteralkohol. Besonders im Sinne der vorliegenden Erfindung geeignet sind dabei Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutylphthalat sowie die genannten Mischungen von Alkylphthalaten.

Weiterhin als Weichmacher geeignet sind die Ester aliphatischer Dicarbonsäuren, insbesondere die Ester von Adipin-, Azelain- oder Sebacinsäure oder Gemische aus zwei oder mehr davon. Beispiele für derartige Weichmacher sind Di-2-ethylhexyladipat, Di-isooctyladipat, Di-iso-nonyladipat, Di-iso-decyladipat, Benzylbutyladipat, Benzyloctyladipat, Di-2-ethylhexylazelat, Di-2-ethylhexylsebacat und Di-iso-decylsebacat. Bevorzugt sind im Rahmen einer weiteren Ausführungsform der vorliegenden Erfindung Di-2-ethylhexylacetat und Di-iso-octyladipat.

Ebenfalls als Weichmacher geeignet sind Trimellithsäureester wie Tri-2-ethylhexyltrimellithat, Tri-iso-tridecyltrimellithat, Tri-iso-octyltrimellithat sowie Trimellithsäureester mit 6 bis 8, 6 bis 10, 7 bis 9 oder 9 bis 11 C-Atomen in der Estergruppe oder Gemische aus zwei oder mehr der genannten Verbindungen.

Weiterhin geeignete Weichmacher sind beispielsweise Polymerweichmacher, wie sie in "Kunststoffadditive", R. Gächter/H. Müller, Carl Hanser Verlag, 3. Auflage, 1989, Kapitel 5.9.6, Seiten 412-415, oder "PVC Technology", W. V. Titow, 4th Edition, Elsevier Publishers, 1984, Seiten 165-170, angegeben sind. Die gebräuchlichsten Ausgangsmaterialien für die Herstellung von Polyesterweichmacher sind beispielsweise Dicarbonsäuren wie Adipin-, Phthal-, Azelain- oder Sebacinsäure sowie Diole wie 1,2-Propandiol, 1,3-Butandiol, 1,4-Butandiol, 1,6-Hexandiol, Neopentylglykol oder Diethylenglykol oder Gemische aus zwei oder mehr davon.

Ebenfalls als Weichmacher geeignet sind Phosphorsäureester, wie sie im "Taschenbuch der Kunststoffadditive", Kapitel 5.9.5, S. 408-412 zu finden sind. Beispiele für geeignete Phosphorsäureester sind Tributylphosphat, Tri-2-ethylbutylphosphat, Tri-2-ethylhexylphosphat, Trichlorethylphosphat, 2-Ethylhexyl-di-phenylphosphat, Triphenylphosphat, Trikresylphosphat oder Trixylenylphosphat, oder Gemische aus zwei oder mehr davon.

Weiterhin als Weichmacher geeignet sind chlorierte Kohlenwasserstoffe (Paraffine) oder Kohlenwasserstoffe wie sie in "Kunststoffadditive", R. Gächter/H. Müller, Carl Hanser Verlag, 3. Auflage, 1989, Kapitel 5.9.14.2, S. 422-425 und Kapitel 5.9.14.1, S. 422, beschrieben sind.

Eine erfindungsgemäße Stabilisatorzusammensetzung kann die beschriebenen Weichmacher in einer Menge von bis zu etwa 99,5 Gew.-%, insbesondere bis zu etwa 30 Gew.-%, bis zu etwa 20 Gew.-% oder bis zu etwa 10 Gew.-%, jeweils bezogen auf die gesamte Stabilisatorzusammensetzung, enthalten. Im Rahmen einer bevorzugten Ausführungsform der vorliegenden Erfindung beträgt die Untergrenze für die beschriebenen Weichmacher als Bestandteil der erfindungsgemäßen Stabilisatorzusammensetzungen etwa 0,1 Gew.-% oder mehr, beispielsweise etwa 0,5 Gew.-%, 1 Gew.-%, 2 Gew.-% oder 5 Gew.-%, jeweils bezogen auf die gesamte Stabilisatorzusammensetzung.

Ebenfalls als Bestandteil der erfindungsgemäßen Stabilisatorzusammensetzungen geeignet sind Pigmente. Beispiele für geeignete anorganische Pigmente sind Titandioxid, Ruß, Fe₂O₃, Sb₂O₃, (Ba, Sb)O₂, Cr₂O₃, Spinelle wie Kobaltblau und Kobaltgrün, Cd (S, Se) oder Ultramarinblau. Als organische Pigmente sind beispielsweise Azopigmente, Phthalocyaninpigmente, Chinacridonpigmente, Perylenpigmente, Diketopyrrolopyrrolpigmente oder Anthachinonpigmente geeignet.

Eine erfindungsgemäße Stabilisatorzusammensetzung kann weiterhin Füllstoffe, wie sie im "Handbook of PVC Formulating", E. J. Wickson, John Wiley & Sons, Inc., 1993, auf den Seiten 393-449 beschrieben sind, oder Verstärkungsmittel, wie sie im "Taschenbuch der Kunststoffadditive", R. Gächter/H. Müller, Carl Hanser Verlag, 1990, Seiten 549-615 beschrieben sind, enthalten. Besonders geeignete Füllstoffe oder Verstärkungsmittel sind beispielsweise Calciumcarbonat (Kreide), Dolomit, Wollastonit, Magnesiumoxid, Magnesiumhydroxid, Silikate, Glasfasern, Talk, Kaolin, Kreide, Ruß oder Graphit, Holzmehl oder andere nachwachsende Rohstoffe. Im Rahmen einer bevorzugten Ausführungsform der vorliegenden Erfindung enthält eine erfindungsgemäße Stabilisatorzusammensetzung Kreide.

Im Rahmen einer weiteren Ausführungsform der vorliegenden Erfindung können die erfindungsgemäßen Stabilisatorzusammensetzungen Antioxidantien, UV-Absorber und Lichtschutzmittel oder Treibmittel enthalten. Geeignete Antioxidantien sind beispielsweise in der EP-A 1 046 668 auf den Seiten 33 bis 35 beschrieben.

Geeignete UV-Absorber und Lichtschutzmittel werden in der EP-A 1 046 668 auf den Seiten 35 und 36 genannt. Auf beide Offenbarungen wird hier ausdrücklich Bezug genommen, wobei die Offenbarungen als Bestandteil des vorliegenden Textes betrachtet werden.

Als Treibmittel eignen sich beispielsweise organische Azo- und Hydrazoverbindungen, Tetrazole, Oxazine, Isatosäureanhydrid, Salze der Citronensäure, beispielsweise Ammoniumcitrat, sowie Soda und Natriumbicarbonat. Besonders geeignet sind beispielsweise Ammoniumcitrat, Azodicarbonamid oder Natriumbicarbonat oder Gemische aus zwei oder mehr davon.

Eine erfindungsgemäße Stabilisatorzusammensetzung kann darüber hinaus noch Schlagzähmodifikatoren und Verarbeitungshilfen, Geliermittel, Antistatika, Biozide, Metalldesaktivatoren, optische Aufheller, Flammschutzmittel sowie Antifoggingverbindungen enthalten. Geeignete Verbindungen dieser Verbindungsklassen sind beispielsweise in "Kunststoff Additive", R. Keßler/H. Müller, Carl Hanser Verlag, 3. Auflage, 1989 sowie im "Handbook of PVC Formulating", E.J. Wilson, J. Wiley & Sons, 1993 beschrieben.

Als Zusatzstoffe gemäß vorliegender Erfindung sind weiterhin sowohl anorganische als auch organische Lösungsmittel sowie deren Gemische geeignet. Erfindungsgemäß geeignete Lösungsmittel sind beispielsweise polare organische Lösungsmittel. Als polare organische Lösungsmittel sind erfindungsgemäß alle Lösungsmittel geeignet, deren Moleküle ein elektrisches Dipolmoment aufweisen, beispielsweise polare organische Lösungsmittel mit elektronegativen Heteroatomen wie O, S, N, P, F, Cl, Br.

Beispielsweise als polare organische Lösungsmittel einsetzbar sind Polyole. Im Rahmen der vorliegenden Erfindung bezeichnet der Begriff "Polyole" organische Verbindungen, die zwei oder mehr OH-Gruppen pro Molekül aufweisen. Geeignete Polyole sind beispielsweise Pentaerythrit, Dipentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Tris-(hydroxyethyl)isocyanurat, Palatinit, Tetramethylolcyclohexanol, Tetramethylolcyclopentanol, Tetramethylolcycloheptanol, Glycerin, Diglycerin, Polyglycerin, Thiodiglycerin oder 1-0-α-D-Glycopyranosyl-D-mannit-dihydrat. Im Rahmen einer weiteren Ausführungsform der vorliegenden Erfindung umfasst daher eine Stabilisatorzusammensetzung mindestens ein Polyol als Lösungsmittel.

Ebenfalls als polares organisches Lösungsmittel geeignet sind aliphatische Aminoalkohole, beispielsweise Aminomonoalkohole oder Aminopolyole mit 2 bis etwa 40, vorzugsweise 2 bis etwa 20 C-Atomen, beispielsweise Ethanolamin, Diethanolamin, Triethanolamin, Triisopropanolamin, Tri-n-propanolamin, Tributanolamin, Tripentanolamin, 1-Amino-3,3-dimethyl-pentan-5-ol, 2-Aminohexan-2',2"-diethanolamin, 1-Amino-2,5-dimethylcyclohexan-4-ol, 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen eingesetzt werden.

Beispielsweise können die oben genannten Lösemittel Bestandteil von vorkonfektionierten Zubereitungen von Salzen der oben genannten Supersäuren sein. Geeignete Zubereitungen werden beispielsweise in der DE 101 60 662 A1 beschrieben. Auf die genannte Druckschrift wird ausdrücklich Bezug genommen und deren Inhalt als Bestandteil der Offenbarung des vorliegenden Textes betrachtet.

Als weitere Zusatzstoffe eignen sich im Rahmen der vorliegenden Erfindung beispielsweise Verbindungen, die mindestens ein mercaptofunktionelles, sp²-hybridisiertes C-Atom aufweisen. Unter Verbindungen, die mindestens ein mercaptofunktionelles, sp²-hybridisiertes C-Atom aufweisen, werden im Rahmen der vorliegenden Erfindung grundsätzlich alle Verbindungen verstanden, die ein Strukturelement Z¹=CZ²-SH oder ein Strukturelement (Z¹H, Z²)C=S aufweisen, wobei beide Strukturelemente tautomere Formen einer einzigen Verbindung sein können. Z¹ und Z² bezeichnen substituierte oder unsubstituierte organische Reste, die in Kombination mit den mercaptofunktionellen, sp²-hybridisierten C-Atomen erfindungsgemäße Verbindungen realisieren, die mindestens ein mercaptofunktionelles, sp²-hybridisiertes C-Atom aufweisen. Dabei können Z¹ und Z² gegebenenfalls miteinander verbunden und Teil eines Ringsystems sein. Das sp²-hybridisierte C-Atom kann dabei Bestandteil einer gegebenenfalls substituierten aliphatischen Verbindung oder Bestandteil eines aromatischen Systems sein. Geeignete Verbindungstypen sind beispielsweise Thiocarbamidsäurederivate, Thiocarbamate, Thiocarbonsäuren, Thiobenzoesäurederivate, Thioacetonderivate oder Thioharnstoff oder Thioharnstoffderivate. Geeignete Verbindungen mit mindestens einem mercaptofunktionellen, sp²-hybridisierten C-Atom werden beispielsweise in der deutschen Patentanmeldung mit dem Aktenzeichen 101 09 366.7 genannt.

Im Rahmen einer bevorzugten Ausführungsform der vorliegenden Erfindung wird als Verbindung mit mindestens einem mercaptofunktionellen, sp²-hybridisierten C-Atom Thioharnstoff oder ein Thioharnstoffderivat eingesetzt.

Ebenfalls als Zusatzstoffe für die erfindungsgemäßen Stabilisatorzusammensetzungen eignen sich beispielsweise Carbazol oder Carbazolderivate oder Gemische aus zwei oder mehr davon, sofern sie nicht bereits an anderer Stelle dieses Textes beschrieben sind.

Weiterhin als Zusatzstoffe geeignet sind beispielsweise Derivate des 2,4-Pyrrolidindion, wie sie beispielsweise in der nicht vorveröffentlichten deutschen Patentanmeldung mit dem Aktenzeichen 101 09 366.7 genannt werden und nicht bereits an anderer Stelle dieses Textes beschrieben sind. Im Rahmen einer speziellen Ausführungsform enthält eine Stabilisatorzusammensetzung gemäß vorliegender Erfindung daher mindestens einen stickstoffhaltigen Zusatzstoff.

Die erfindungsgemäßen Stabilisatorzusammensetzungen umfassend erfindungsgemäße Stickstoff-Verbindungen eignen sich beispielsweise zur Stabilisierung halogenhaltiger Polymerer. Die vorliegende Erfindung betrifft daher weiterhin die Verwendung einer Guanidin-Verbindung oder einer Melamin-Verbindung oder eines Gemischs aus zwei oder mehr dieser Verbindungen oder einer Stabilisatorzusammensetzung gemäß vorliegender Erfindung zur Stabilisierung halogenhaltiger Polymerer. Gemäß einer bevorzugten Ausführungsform betrifft die vorliegende Erfindung die Verwendung von Cyanoguanidin oder ein Gemisch aus Cyanoguanidin und mindestens einer weiteren Stickstoff-Verbindung, beispielsweise einer weiteren Guanidin-Verbindung oder Melamin-Verbindung, zur Stabilisierung halogenhaltiger Polymerer. Entsprechend einer weiteren bevorzugten Ausführungsform betrifft die vorliegende Erfindung die Verwendung einer Melamin-Verbindung oder ein Gemisch aus einer Melamin-Verbindung und mindestens einer weiteren Stickstoff-Verbindung zur Stabilisierung halogenhaltiger Polymerer.

Beispiele für derartige halogenhaltige Polymere sind Polymere des Vinylchlorids, Vinylharze die Vinylchlorideinheiten im Polymerrückgrat enthalten, Copolymere von Vinylchlorid und Vinylestern aliphatischer Säuren, insbesondere Vinylacetat, Copolymere von Vinylchlorid mit Estern der Acryl- und Methacrylsäure oder Acrylnitril oder Gemischen aus zwei oder mehr davon, Copolymere des Vinylchlorids mit Dienverbindungen oder ungesättigten Dicarbonsäuren oder deren Anhydriden, beispielsweise Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether und dergleichen, Polymere und Copolymere des Vinylidenchlorids mit Vinylchlorid und anderen polymerisierbaren Verbindungen, wie sie bereits oben genannt wurden, Polymere des Vinylchloracetats und Dichlordivinylethers, chlorierte Polymere des Vinylacetats, chlorierte polymere Ester der Acrylsäure und der α-substituierten Acrylsäuren, chlorierte Polystyrole, beispielsweise Polydichlorstyrol, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der obengenannten Polymere enthalten. Im Rahmen einer bevorzugten Ausführungsform der vorliegenden Erfindung werden die erfindungsgemäßen Stabilisatorzusammensetzungen zur Herstellung von Formteilen aus PVC-U wie Fensterprofilen, technischen Profilen, Rohren und Platten eingesetzt.

Ebenfalls zur Stabilisierung mit den erfindungsgemäßen Stabilisatorzusammensetzungen geeignet sind die Pfropfpolymerisate von PVC mit EVA, ABS oder MBS. Bevorzugte Substrate für derartige Propfcopolymere sind außerdem die vorstehend genannten Homo- und Copolymerisate, insbesondere Mischungen von Vinylchlorid-Homopolymerisaten mit anderen thermoplastischen oder elastomeren Polymeren, insbesondere Blends mit ABS, MBS, NBR, SAN, EVA, CPE, MBAS, PAA (Polyalkylacrylat), PAMA (Polyalkylmethacrylat), EPDM, Polyamiden oder Polylactonen.

Ebenfalls zur Stabilisierung mit den erfindungsgemäßen Stabilisatorzusammensetzungen geeignet sind Gemische von halogenierten und nicht-halogenierten Polymeren, beispielsweise Gemische der oben genannten nicht-halogenierten Polymeren mit PVC, insbesondere Gemische von Polyurethanen und PVC.

Weiterhin können mit den erfindungsgemäßen Stabilisatorzusammensetzungen auch Rezyklate chlorhaltiger Polymere stabilisiert werden, wobei grundsätzlich alle Rezyklate der obengenannten, halogenierten Polymeren hierzu geeignet sind. Geeignet ist im Rahmen der vorliegenden Erfindung beispielsweise PVC-Rezyklat.

Ein weiterer Gegenstand der vorliegenden Erfindung ist daher eine Polymerzusammensetzung, mindestens enthaltend ein halogenhaltiges Polymeres und eine erfindungsgemäße Stabilisatorzusammensetzung.

Im Rahmen einer bevorzugten Ausführungsform der vorliegenden Erfindung enthält eine erfindungsgemäße Polymerzusammensetzung die erfindungsgemäße Stabilisatorzusammensetzung in einer Menge von 0,1 bis 20 phr, insbesondere etwa 0,5 bis etwa 15 phr oder etwa 1 bis etwa 12 phr. Die Einheit phr steht für "per hundred resin" und betrifft damit Gewichtsteile pro 100 Gewichtsteile Polymeres.

Vorzugsweise enthält eine erfindungsgemäße Polymerzusammensetzung als halogeniertes Polymeres zumindest anteilsweise PVC, wobei der PVC-Anteil insbesondere mindestens etwa 20, vorzugsweise mindestens etwa 50 Gew.-%, beispielsweise mindestens etwa 80 oder mindestens etwa 90 Gew.-%, jeweils bezogen auf die gesamte Polymerzusammensetzung, beträgt.

Die vorliegende Erfindung betrifft auch ein Verfahren zur Stabilisierung halogenhaltiger Polymerer, bei dem ein halogenhaltiges Polymeres oder ein Gemisch aus zwei oder mehr halogenhaltige Polymeren oder ein Gemisch aus einem oder mehreren halogenhaltigen Polymeren und einem oder mehreren halogenfreien Polymeren mit einer erfindungsgemäßen Stabilisatorzusammensetzung vermischt wird.

Die Vermischung von Polymeren oder Polymeren und der erfindungsgemäße Stabilisatorzusammensetzung kann grundsätzlich zu jedem beliebigen Zeitpunkt vor oder während der Verarbeitung des Polymeren erfolgen. So kann die Stabilisatorzusammensetzung beispielsweise dem in Pulver- oder Granulatform vorliegenden Polymeren vor der Verarbeitung zugemischt werden. Es ist jedoch ebenso möglich, die Stabilisatorzusammensetzung dem Polymeren oder den Polymeren in erweichtem oder geschmolzenem Zustand, beispielsweise während der Verarbeitung in einem Extruder, als Emulsion oder als Dispersion, als pastöse Mischung, als trockene Mischung, als Lösung oder Schmelze zuzusetzen.

Gegenstand der vorliegenden Erfindung ist daher auch ein Verfahren zur Stabilisierung halogenhaltiger Polymerer, bei dem ein halogenhaltiges Polymeres oder ein Gemisch aus zwei oder mehr halogenhaltigen Polymeren oder ein Gemisch aus einem oder mehreren halogenhaltigen Polymeren und einem oder mehreren halogenfreien Polymeren mit einer erfindungsgemäßen Stabilisatorzusammensetzung vermischt wird.

Eine erfindungsgemäße Polymerzusammensetzung kann auf bekannte Weise in eine gewünschte Form gebracht werden. Geeignete Verfahren sind beispielsweise Kalandrieren, Extrudieren, Spritzgießen, Sintern, Extrusions-Blasen oder das Plastisol-Verfahren. Eine erfindungsgemäße Polymerzusammensetzung kann beispielsweise auch zur Herstellung von Schaumstoffen verwendet werden. Grundsätzlich eignen sich die erfindungsgemäßen Polymerzusammensetzungen zur Herstellung von hart- oder weich-PVC, insbesondere zur Herstellung von PVC-U.

Eine erfindungsgemäße Polymerzusammensetzung kann zu Formkörpern verarbeitet werden. Gegenstand der vorliegenden Erfindung sind somit auch Formkörper, mindestens enthaltend eine erfindungsgemäße Stabilisatorzusammensetzung oder eine erfindungsgemäße Polymerzusammensetzung.

Der Begriff "Formkörper" umfasst im Rahmen der vorliegenden Erfindung grundsätzlich alle dreidimensionalen Gebilde, die aus einer erfindungsgemäßen Polymerzusammensetzung herstellbar sind. Der Begriff "Formkörper" umfasst im Rahmen der vorliegenden Erfindung beispielsweise Drahtummantelungen, Automobilbauteile, beispielsweise Automobilbauteile wie sie im Innenraum des Automobils, im Motorraum oder an den Außenflächen eingesetzt werden, Kabelisolierungen, Dekorationsfolien, Agrarfolien, Schläuche, Dichtungsprofile, Bürofolien, Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Platten, Schaumplatten, Coextrudate mit recyceltem Kern oder Gehäuse für elektrische Apparaturen oder Maschinen, beispielsweise Computer oder Haushaltsgeräte.

Weitere Beispiele für aus einer erfindungsgemäßen Polymerzusammensetzung herstellbare Formkörper sind Kunstleder, Bodenbeläge, Textilbeschichtungen, Tapeten, Coil-Coatings oder Unterbodenschutz für Kraftfahrzeuge.

Die Erfindung wird nachfolgend durch ein Beispiel näher erläutert.

### Beispiel:

### 1) Polymerzusammensetzung

| | |
|---|---|
| S-PVC (K-Wert 68) | 100,00 |
| Kreide | 5,00 |
| Ca(OH)₂ | 0,10 |
| Ca-Stearat (Ceasit SW) | 0,45 |
| Mikrowachs (Baerolub LKT) | 0,50 |
| Esterwachs (Baerolub 43 C) | 0,20 |
| Gehärtetes Ricinusöl (Baerolub LCD) | 0,25 |
| Zeolith | 0,30 |
| BS ASM 711 (NaClO₄ auf Ca(OH)₂) | 0,10 |

| Substanz | Beispiel | Vergleichs beispiel |
|---|---|---|
| Cyanoguanidin | 0,25 | -- |
| BGAC (1,4-Butylenglykolbis(3-aminocrotonat)) | 0,10 | 0,10 |

Alle Mengenangaben beziehen sich auf 100 Teile PVC [phr - per hundred resin]

### 2) Ergebnis

Die erfindungsgemäße Polymerzusammensetzung zeichnet sich durch eine hervorragende Anfangsfarbe und eine ausgezeichnete Farbhaltung aus. Hinsichtlich beider Eigenschaften ist sie der Polymerzusammensetzung entsprechend dem Vergleichsbeispiel deutlich überlegen.

## Patentansprüche

1. Stabilisatorzusammensetzung umfassend eine Guanidin-Verbindung oder eine Melamin-Verbindung oder ein Gemisch aus zwei oder mehr dieser Verbindungen und eine weitere Stickstoff enthaltende Verbindung oder ein Gemisch aus zwei oder mehr weiteren Stickstoff enthaltenden Verbindungen, wobei eine weitere Stickstoff enthaltende Verbindung ein Carbazol oder ein Carbazol-Derivat oder 2,4-Pyrrolidindion oder ein 2,4-Pyrrolidindion-Derivat oder ein heterozyklischer Aminoalkohol oder eine Verbindung mit einem Strukturelement der allgemeinen Formel I 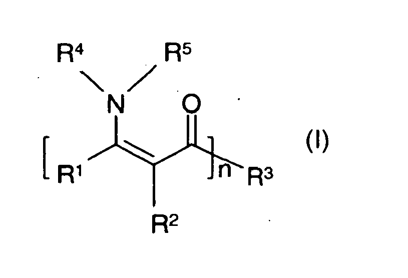 ist, worin n für eine Zahl von 1 bis 100.000, die Reste R¹, R², R⁴ und R⁵ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R¹ für einen gegebenenfalls substituierten Acylrest mit 2 bis 44 C-Atomen steht oder die Reste R¹ und R² zu einem aromatischen oder heterocyclischen System verbunden sind und worin der Rest R³ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoalkylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, NR⁴ oder CH₂C(O) mit dem in Klammern stehenden Strukturelement verbunden ist, steht oder der Rest R³ mit dem Rest R¹ so verbunden ist, dass insgesamt ein gegebenenfalls substituiertes, gesättigtes oder ungesättigtes heterocyclisches Ringsystem mit 4 bis 24 C-Atomen gebildet wird, oder ein Aminouracil-Derivat.

2. Stabilisatorzusammensetzung nach Anspruch 1, **dadurch gekennzeichnet, dass** mindestens eine Guanidin-Verbindung eine Cyanoguanidin-Verbindung ist.

3. Stabilisatorzusammensetzung nach Anspruch 1 oder 2, **dadurch gekennzeichnet, dass** mindestens eine Guanidin-Verbindung Cyanoguanidin ist.

4. Stabilisatorzusammensetzung nach einem der Ansprüche 1 bis 3, **dadurch gekennzeichnet, dass** mindestens eine weitere Stickstoff enthaltende Verbindung eine Verbindung mit einem Strukturelement der allgemeinen Formel I ist.

5. Stabilisatorzusammensetzung nach einem der Ansprüche 1 bis 4, **dadurch gekennzeichnet, dass** mindestens eine weitere Stickstoff enthaltende Verbindung ein β-Aminocrotonat ist.

6. Stabilisatorzusammensetzung nach einem der Ansprüche 1 bis 5, **dadurch gekennzeichnet, dass** mindestens eine weitere Stickstoff enthaltende Verbindung 1,4-Butylenglykolbis(3-amincrotonat) ist.

7. Stabilisatorzusammensetzung nach einem der Ansprüche 1 bis 6, **dadurch gekennzeichnet, dass** sie mindestens einen Zusatzstoff enthält.

8. Stabilisatorzusammensetzung nach einem der Ansprüche 1 bis 7, **dadurch gekennzeichnet, dass** sie mindestens eine Supersäure oder ein Salz einer Supersäure oder ein Gemisch aus zwei oder mehr davon enthält.

9. Stabilisatorzusammensetzung nach einem der Ansprüche 1 bis 8, **dadurch gekennzeichnet, dass** mindestens eine Supersäure einen ΔG_{acid}-Wert von kleiner oder gleich 316 kcal/mol aufweist.

10. Stabilisatorzusammensetzung nach einem der Ansprüche 1 bis 9, **dadurch gekennzeichnet, dass** mindestens eine Supersäure eine halogenhaltige Oxysäure oder mindestens ein Salz einer Supersäure ein Salz einer halogenhaltigen Oxysäure ist.

11. Stabilisatorzusammensetzung nach einem der Ansprüche 1 bis 10, **dadurch gekennzeichnet, dass** mindestens eine Supersäure Perchlorsäure oder mindestens ein Salz einer Supersäure ein Salz der Perchlorsäure ist.

12. Stabilisatorzusammensetzung nach einem der Ansprüche 1 bis 11, **dadurch gekennzeichnet, dass** mindestens eine Supersäure eine Sulfonsäure oder mindestens ein Salz einer Supersäure ein Salz einer Sulfonsäure ist.

13. Stabilisatorzusammensetzung nach einem der Ansprüche 1 bis 12, **dadurch gekennzeichnet, dass** mindestens eine Supersäure eine Alkylsulfonsäure oder mindestens ein Salz einer Supersäure ein Salz einer Alkylsulfonsäure ist.

14. Stabilisatorzusammensetzung nach einem der Ansprüche 1 bis 13, **dadurch gekennzeichnet, dass** mindestens eine Supersäure Trifluoromethylsulfonsäure oder mindestens ein Salz einer Supersäure ein Salz der Trifluoromethylsulfonsäure ist.

15. Stabilisatorzusammensetzung nach einem der Ansprüche 1 bis 14, **dadurch gekennzeichnet, dass** mindestens eine Supersäure eine Säure der Formel HCB₁₁H₁₂, oder eine teilweise oder vollständig substituierte Säure der Formel HCB₁₁A¹ᵤA²ᵥA³_{w}H_{(12-u-v-w)}, wobei A¹ für ein Halogenatom, A² für eine Alkylgruppe, A³ für eine teilweise oder vollständig halogenierte Alkylgruppe stehen und u, v, w jeweils eine ganze Zahl von 0 bis 12 unter der Maßgabe u + v + w ≤ 12 bedeuten, oder eine Säure der Formel (F₂ₑ₊₁CₑSO₂)₂NH oder eine Säure der Formel (F₂ₑ₊₁CₑCO)₂NH, wobei e in beiden Formeln eine ganze Zahl von 1 bis 44 bedeutet, oder eine fluorierte Tetraphenylborsäure, oder eine Polyfluoroalkoxyaluminiumsäure, oder Pikrinsäure, oder Bis(oxalato)borsäure, oder mindestens ein Salz einer Supersäure ein Salz einer solchen Supersäure ist.

16. Verwendung einer Guanidin-Verbindung oder einer Melamin-Verbindung oder eines Gemischs aus zwei oder mehr dieser Verbindungen zur Stabilisierung halogenhaltiger Polymerer.

17. Verwendung nach Anspruch 16, **dadurch gekennzeichnet, dass** als Guanidin-Verbindung Cyanoguanidin oder als ein Gemisches aus zwei oder mehr Guanidin-Verbindungen ein Gemisch aus Cyanoguanidin und mindestens einer weiteren Guanidin-Verbindung zur Stabilisierung halogenhaltiger Polymerer verwendet wird.

18. Polymerzusammensetzung, mindestens enthaltend ein halogenhaltiges Polymeres und eine Stabilisatorzusammensetzung nach einem der Ansprüche 1 bis 15.

19. Verfahren zur Stabilisierung halogenhaltiger Polymerer, bei dem ein halogenhaltiges Polymeres oder ein Gemisch aus zwei oder mehr halogenhaltigen Polymeren oder ein Gemisch aus einem oder mehreren halogenhaltigen Polymeren und einem oder mehreren halogenfreien Polymeren mit einer Stabilisatorzusammensetzung nach einem der Ansprüche 1 bis 15 vermischt wird.

20. Formkörper, mindestens enthaltend eine Stabilisatorzusammensetzung gemäß einem der Ansprüche 1 bis 15 oder eine Polymerzusammensetzung gemäß Anspruch 18.

## Claims

1. Stabilizer composition encompassing a guanidine compound or a melamine compound, or a mixture composed of two or more of the said compounds, and comprising a further nitrogen-containing compound, or a mixture composed of two or more further nitrogen-containing compounds, where a further nitrogen-containing compound is a carbazole or a carbazole derivative or 2,4-pyrrolidinedione or a 2,4-pyrrolidinedione derivative, or is a heterocyclic amino alcohol, or is a compound having a structural element of the general formula I 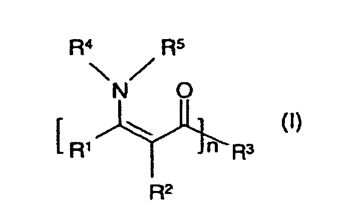 in which n is a number from 1 to 100 000, each of the moieties R¹, R², R⁴ and R⁵, independently of the others, is hydrogen, or an unsubstituted or substituted linear or branched, saturated or unsaturated aliphatic alkyl moiety having from 1 to 44 C atoms, or an unsubstituted or substituted saturated or unsaturated cycloalkyl moiety having from 6 to 44 C atoms, or an unsubstituted or substituted aryl moiety having from 6 to 44 C atoms, or an unsubstituted or substituted aralkyl moiety having from 7 to 44 C atoms, or the moiety R¹ is an unsubstituted or substituted acyl moiety having from 2 to 44 C atoms, or the moieties R¹ and R² have bonding to give an aromatic or heterocyclic system, and in which the moiety R³ is hydrogen, an unsubstituted or substituted, linear or branched, saturated or unsaturated aliphatic alkyl or, respectively, alkylene moiety or, respectively, oxyalkyl or oxyalkylene moiety, or, respectively, mercaptoalkyl or mercaptoalkylene moiety or, respectively, aminoalkyl or aminoalkylene moiety, having from 1 to 44 C atoms, an unsubstituted or substituted saturated or unsaturated cycloalkyl or cycloalkylene moiety or, respectively, oxycycloalkyl or oxycycloalkylene moiety or, respectively, mercaptocycloalkyl or mercaptocycloalkylene moiety or, respectively, aminocycloalkyl or aminocycloalkylene moiety, having from 6 to 44 C atoms, or an unsubstituted or substituted aryl or arylene moiety having from 6 to 44 C atoms, or an ether or thioether moiety having from 1 to 20 O atoms or, respectively, S atoms, or, respectively, O and S atoms, or a polymer which has bonding by way of O, S, NH, NR⁴ or CH₂C(O) to the structural element placed within parentheses, or the moiety R³ has bonding to the moiety R¹ in such a way as to form, in total, an unsubstituted or substituted, saturated or unsaturated heterocyclic ring system having from 4 to 24 C atoms, or an aminouracil derivative.

2. Stabilizer composition according to Claim 1, **characterized in that** at least one guanidine compound is a cyanoguanidine compound.

3. Stabilizer composition according to Claim 1 or 2, **characterized in that** at least one guanidine compound is cyanoguanidine.

4. Stabilizer composition according to any of Claims 1 to 3, **characterized in that** at least one further nitrogen-containing compound is a compound having a structural element of the general formula I.

5. Stabilizer composition according to any of Claims 1 to 4, **characterized in that** at least one further nitrogen-containing compound is a β-aminocrotonate.

6. Stabilizer composition according to any of Claims 1 to 5, **characterized in that** at least one further nitrogen-containing compound is butylene 1,4-glycol bis(3-aminocrotonate).

7. Stabilizer composition according to any of Claims 1 to 6, **characterized in that** it comprises at least one additive.

8. Stabilizer composition according to any of Claims 1 to 7, **characterized in that** it comprises at least one superacid or one salt of a superacid or a mixture composed of two or more thereof.

9. Stabilizer composition according to any of Claims 1 to 8, **characterized in that** at least one superacid has a ΔG_{acid} value smaller than or equal to 316 kcal/mol.

10. Stabilizer composition according to any of Claims 1 to 9, **characterized in that** at least one superacid is a halogen-containing oxy acid or at least one salt of a superacid is a salt of a halogen-containing oxy acid.

11. Stabilizer composition according to any of Claims 1 to 10, **characterized in that** at least one superacid is perchloric acid or at least one salt of a superacid is a salt of perchloric acid.

12. Stabilizer composition according to any of Claims 1 to 11, **characterized in that** at least one superacid is a sulphonic acid or at least one salt of a superacid is a salt of a sulphonic acid.

13. Stabilizer composition according to any of Claims 1 to 12, **characterized in that** at least one superacid is an alkylsulphonic acid or at least one salt of a superacid is a salt of an alkylsulphonic acid.

14. Stabilizer composition according to any of Claims 1 to 13, **characterized in that** at least one superacid is trifluoromethylsulphonic acid or at least one salt of a superacid is a salt of trifluoromethylsulphonic acid.

15. Stabilizer composition according to any of Claims 1 to 14, **characterized in that** at least one superacid is an acid of the formula HCB₁₁H₁₂, or a partially or completely substituted acid of the formula HCB₁₁A¹ᵤA²ᵥA³_{w}H(_{12-u-v-w}), where A¹ is a halogen atom, A² is an alkyl group, A³ is a partially or completely halogenated alkyl group, and u, v, and w are each a whole number from 0 to 12, with the proviso that u + v + w ≤ 12, or an acid of the formula (F₂ₑ₊₁CₑSO₂)₂NH, or an acid of the formula (F₂ₑ₊₁CₑCO)₂NH, where e in both formulae is a whole number from 1 to 44, or a fluorinated tetraphenylboric acid, or a polyfluoroalkoxyaluminium acid, or picric acid, or bis(oxalato)boric acid, or at least one salt of a superacid is a salt of such a superacid.

16. Use of a guanidine compound or of a melamine compound or of a mixture composed of two or more of these compounds for the stabilization of halogen-containing polymers.

17. Use according to Claim 16, **characterized in that**, for the stabilization of halogen-containing polymers, cyanoguanidine is used as guanidine compound, or a mixture composed of cyanoguanidine and of at least one further guanidine compound is used as a mixture composed of two or more guanidine compounds.

18. Polymer composition, at least comprising a halogen-containing polymer and a stabilizer composition according to any of Claims 1 to 15.

19. Process for the stabilization of halogen-containing polymers, in which a halogen-containing polymer or a mixture composed of two or more halogen-containing polymers, or a mixture composed of one or more halogen-containing polymers and of one or more halogen-free polymers, is mixed with a stabilizer composition according to any of Claims 1 to 15.

20. Moulding, at least comprising a stabilizer composition according to any of Claims 1 to 15 or a polymer composition according to Claim 18.

## Revendications

1. Composition de stabilisant comprenant un composé de type guanidine ou un composé de type mélamine ou un mélange de deux ou plus de deux de tels composés et d'un autre composé contenant de l'azote ou d'un mélange de deux ou plus de deux autres composés contenant de l'azote, un autre composé contenant de l'azote étant un carbazole ou un dérivé de carbazole ou la 2,4-pyrrolidinedione ou un dérivé de 2,4-pyrrolidinedione ou un aminoalcool hétérocyclique ou un composé comportant un élément structural de formule générale I 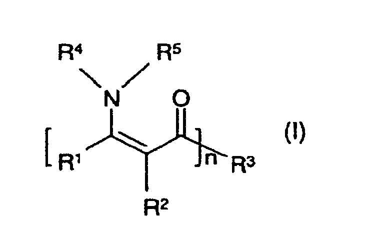 dans laquelle n représente un nombre allant de 1 à 100 000, les radicaux R¹, R², R⁴ et R⁵ représentent chacun, indépendamment les uns des autres, un atome d'hydrogène, un radical alkyle aliphatique saturé ou insaturé, linéaire ou ramifié, éventuellement substitué, ayant de 1 à 44 atomes de carbone, un radical cycloaliphatique saturé ou insaturé, éventuellement substitué, ayant de 6 à 44 atomes de carbone ou un radical aryle éventuellement substitué ayant de 6 à 44 atomes de carbone ou un radical aralkyle éventuellement substitué ayant de 7 à 44 atomes de carbone, ou bien le radical R¹ représente un radical acyle éventuellement substitué ayant de 2 à 44 atomes de carbone, ou les radicaux R¹ et R² sont liés en un système aromatique ou hétérocyclique, et dans laquelle le radical R³ représente un atome d'hydrogène, un radical alkyle ou alkylène ou un radical oxyalkyle ou oxyalkylène ou un radical mercaptoalkyle ou mercaptoalkylène ou un radical aminoalkyle ou aminoalkylène, aliphatique linéaire ou ramifié, saturé ou insaturé, éventuellement substitué, ayant de 1 à 44 atomes de carbone, un radical cycloalkyle ou cycloalkylène ou un radical oxycycloalkyle ou oxycycloalkylène ou un radical mercaptocycloalkyle ou mercaptocycloalkylène ou un radical aminocycloalkyle ou aminocycloalkylène, saturé ou insaturé, éventuellement substitué, ayant de 6 à 44 atomes de carbone, ou un radical aryle ou arylène éventuellement substitué ayant de 6 à 44 atomes de carbone ou un radical éther ou thioéther comportant de 1 à 20 atomes d'oxygène ou de soufre ou atomes d'oxygène et de soufre, ou représente un polymère qui est lié par O, S, NH, NR⁴ ou CH₂C(O) à l'élément structural entre crochets, ou bien le radical R³ est lié au radical R¹ de manière à former ensemble un système cyclique hétérocyclique saturé ou insaturé, éventuellement substitué, ayant de 4 à 24 atomes de carbone, ou un dérivé d'amino-uracile.

2. Composition de stabilisant selon la revendication 1, **caractérisée en ce qu'**au moins un composé de type guanidine est un composé de type cyanoguanidine.

3. Composition de stabilisant selon la revendication 1 ou 2, **caractérisée en ce qu'**au moins un composé de type guanidine est la cyanoguanidine.

4. Composition de stabilisant selon l'une quelconque des revendications 1 à 3, **caractérisée en ce qu'**au moins un autre composé contenant de l'azote est un composé comportant un élément structural de formule générale I.

5. Composition de stabilisant selon l'une quelconque des revendications 1 à 4, **caractérisée en ce qu'**au moins un autre composé contenant de l'azote est un β-aminocrotonate.

6. Composition de stabilisant selon l'une quelconque des revendications 1 à 5, **caractérisée en ce qu'**au moins un autre composé contenant de l'azote est le bis(3-aminocrotonate) de 1,4-butylèneglycol.

7. Composition de stabilisant selon l'une quelconque des revendications 1 à 6, **caractérisée en ce qu'**elle contient au moins un additif.

8. Composition de stabilisant selon l'une quelconque des revendications 1 à 7, **caractérisée en ce qu'**elle contient au moins un peracide ou un sel d'un peracide ou un mélange de deux ou plus de deux de ceux-ci.

9. Composition de stabilisant selon l'une quelconque des revendications 1 à 8, **caractérisée en ce qu'**au moins un peracide présente un indice DG_{acide} inférieur ou égal à 316 kcal/mole.

10. Composition de stabilisant selon l'une quelconque des revendications 1 à 9, **caractérisée en ce qu'**au moins un peracide est un oxacide halogéné ou au moins un sel d'un peracide est un sel d'un oxyacide halogéné.

11. Composition de stabilisant selon l'une quelconque des revendications 1 à 10, **caractérisée en ce qu'**au moins un peracide est l'acide perchlorique ou au moins un acide d'un peracide est un sel de l'acide perchlorique.

12. Composition de stabilisant selon l'une quelconque des revendications 1 à 11, **caractérisée en ce qu'**au moins un peracide est un acide sulfonique ou au moins un sel d'un peracide est un sel d'un acide sulfonique.

13. Composition de stabilisant selon l'une quelconque des revendications 1 à 12, **caractérisée en ce qu'**au moins un peracide est un acide alkylsulfonique ou au moins un sel d'un peracide est un sel d'un acide alkylsulfonique.

14. Composition de stabilisant selon l'une quelconque des revendications 1 à 13, **caractérisée en ce qu'**au moins un peracide est l'acide trifluorométhylsulfonique ou au moins un sel d'un peracide est un sel de l'acide trifluorométhylsulfonique.

15. Composition de stabilisant selon l'une quelconque des revendications 1 à 14, **caractérisée en ce qu'**au moins un peracide est un acide de formule HCB₁₁H₁₂, ou un acide partiellement ou totalement substitué de formule HCB₁₁A¹ᵤA²ᵥA³_{w}H_{(12-u-v-w)}, A¹ représentant un atome d'halogène, A² représentant un groupe alkyle, A³ représentant un groupe alkyle partiellement ou totalement halogéné et u, v, w représentant chacun un nombre entier allant de 0 à 12, étant entendu que la somme u + v + w est ≤ 12, ou un acide de formule (F₂ₑ₊₁CₑSO₂)₂NH ou un acide de formule (F₂ₑ₊₁CₑCO)₂NH, e dans les deux formules représentant un nombre entier allant de 1 à 44, ou un acide tétraphénylborique fluoré, ou un acide polyfluoroalcoxyaluminique, ou l'acide picrique, ou l'acide bis(oxalato)borique, ou au moins un sel d'un peracide est un sel d'un tel peracide.

16. Utilisation d'un composé de type guanidine ou d'un composé de type mélamine ou d'un mélange de deux ou plus de deux de ces composés, pour la stabilisation de polymères halogénés.

17. Utilisation selon la revendication 16, **caractérisée en ce qu'**on utilise en tant que composé de type guanidine la cyanoguanidine ou en tant qu'un mélange de deux ou plus de deux composés de type guanidine un mélange de cyanoguanidine et d'au moins un autre composé de type guanidine, pour la stabilisation de polymères halogénés.

18. Composition de polymère, au moins contenant un polymère halogéné et une composition de stabilisant selon l'une quelconque des revendications 1 à 15.

19. Procédé pour la stabilisation de polymères halogénés, dans lequel on mélange un polymère halogéné ou un mélange de deux ou plus de deux polymères halogénés ou un mélange d'un ou plusieurs polymères halogénés et d'un ou plusieurs polymères exempts d'halogène avec une composition de stabilisant selon l'une quelconque des revendications 1 à 15.

20. Corps moulé, au moins contenant une composition de stabilisant selon l'une quelconque des revendications 1 à 15 ou une composition de polymère selon la revendication 18.
